# EUROPÄISCHE PATENTSCHRIFT

(11) **EP 3 862 194 B1**
(45) Veröffentlichungstag und Bekanntmachung des Hinweises auf die Patenterteilung: **14.08.2024**
(21) Anmeldenummer: 21154792.2
(22) Anmeldetag: 02.02.2021
(51) Int. Cl.: B60B 27/02, B60B 27/04, B62K 25/02, F16D 41/36, F16C 19/56, B60B 27/00

(54) **NABE INSBESONDERE FÜR FAHRRÄDER**
HUB, IN PARTICULAR FOR BICYCLES
MOYEU, EN PARTICULIER POUR BICYCLETTES

(30) Priorität: 07.02.2020 DE 102020103129
(43) Veröffentlichungstag der Anmeldung: 11.08.2021
(73) Patentinhaber: DT Swiss AG, 2504 Biel (CH)
(72) Erfinder: Spahr, Stefan, CH-2543 Lengnau (CH); Haas, Simon, CH-4532 Feldbrunnen (CH); Walthert, Martin, CH-3270 Aarberg (CH)
(74) Vertreter: BSB Patentanwälte Schütte & Engelen Partnerschaft mbB

(56) Entgegenhaltungen:
- EP-A1- 3 118 019
- DE-A1- 102010 033 454
- DE-U1- 202018 001 877

## Beschreibung

Die vorliegende Erfindung betrifft eine Nabe für im normalen und regelmäßigen bestimmungsgemäßen Betrieb wenigstens teilweise muskelbetriebene Fahrzeuge und insbesondere Fahrräder, wobei die Nabe ein Nabengehäuse umfasst, welches insbesondere mit zwei an gegenüberliegenden Endbereichen des Nabengehäuses angeordneten Wälzlagern gegenüber einer Nabenachse drehbar gelagert ist. Die Nabe weist einen Rotor zur drehfesten Anordnung wenigstens eines Ritzels auf, der insbesondere mit wenigstens zwei Rotorlagern gegenüber der Nabenachse drehbar gelagert ist. Zwischen dem Rotor und dem Nabengehäuse ist eine Freilaufeinrichtung vorgesehen.

Außer bei Fahrrädern kann die Nabe auch bei anderen teilweise muskelbetriebenen Fahrzeugen und Zweirädern eingesetzt werden, die zum Beispiel über einen elektrischen Hilfsantrieb verfügen. Insbesondere wird die Nabe bei sportlichen Fahrrädern eingesetzt. In allen Ausgestaltungen wird die erfindungsgemäße Nabe bei solchen Fahrzeugen und insbesondere Fahrrädern eingesetzt, die im normalen und regelmäßigen bestimmungsgemäßen Betrieb wenigstens teilweise muskelbetrieben werden.

Im Stand der Technik sind diverse Naben bekannt geworden, die einen Freilauf aufweisen, damit sich bei zum Beispiel einer Bergabfahrt die Tretkurbel nicht ständig mitdreht. Ein solcher Freilauf bewirkt auch, dass sich das Nabengehäuse und der Rotor beim Rückwärtstreten gegeneinander drehen können.

Im Stand der Technik sind Naben mit Sperrklinkenfreiläufen bekannt geworden, bei denen die Sperrklinken radial zwischen einer Freilaufstellung und einer Eingriffsstellung verschwenken können. Solche Naben verfügen über eine unterschiedliche Anzahl von Sperrklinken, wobei oft vier Sperrklinken symmetrisch auf dem Umfang verteilt angeordnet sind. Die Sperrklinken greifen bei Kraftübertragung in eine Verzahnung im Rotor ein. Durch die relativ geringe Zahl an Sperrklinken ist ein relativ großer Drehwinkel erforderlich, bis beim Antreten wieder ein Drehmoment übertragen wird. Beispielsweise zeigen die EP 3 118 091 A1 und die DE 20 2018 001 877 U1 Naben mit Sperrklinkenfreiläufen.

Mit der DE 94 19 357 U1 ist eine Nabe mit einem Zahnscheibenfreilauf bekannt geworden, der zuverlässig und sehr schnell die Antriebskraft von dem Rotor auf das Nabengehäuse überträgt, während andererseits die Reibungsverluste relativ gering sind, wenn der Benutzer die Pedale nicht betätigt. Ein Zahnscheibenfreilauf hat viele Vorteile und ermöglicht ein besonders schnelles Ansprechen des Freilaufs. Bei diesem Freilauf wird über ein Paar von Zahnscheiben ein Vorwärtsdrehmoment des Rotors übertragen, während beim Rückwärtstreten die Zähne axial außer Eingriff kommen. Die bekannte Nabe funktioniert an sich zufriedenstellend und wird im sportlichen und auch professionellen Bereich eingesetzt. Ein gewisser Nachteil ist allerdings, dass bei Überlasten und den sehr hohen Belastungen der Nabe beispielsweise bei einer Bergauffahrt derartige Biegemomente an der Nabe auftreten können, dass eine leichte Verkippung einer Zahnscheibe auftreten kann, was zu einem größeren Verschleiß der stärker belasteten Zähne führt, sodass die Haltbarkeit begrenzt wird und die Zahnscheiben früh genug ausgetauscht werden müssen, um eine Fehlfunktion zu vermeiden.

Die DE 10 2010 033 268 A1 offenbart eine Nabe, bei der zwei Bauteile mit Stirnverzahnungen einen Axialfreilauf bilden. Zwei jeweils benachbarte Nabenlager an den Enden des Nabengehäuses dienen zur Abstützung gegenüber der Nabenachse. Nachteilig ist der große Platzbedarf für die benachbarten Nabenlager. Außerdem verfügt die Nabenachse über keine radialen Absätze und kann deshalb nicht zur axialen Abstützung der Nabenbauteile dienen. Zur axialen Abstützung der Nabe wird deshalb an einer Seite die Axialkraft von einem Wälzlager durch dessen Wälzkörper in das Nabengehäuse übertragen und an der anderen Seite wieder durch die Wälzkörper eines Wälzlagers über auf der Nabenachse angeordnete Hülsenelemente abgeleitet. In einer weiteren stark schematisch enthaltenen Ausführungsform sind ein oder zwei Nabenlager innen an dem Bauteil mit der Stirnverzahnung aufgenommen und in noch einer anderen stark schematisch dargestellten Ausführungsform ist einstückig an dem äußeren Laufring des Nabenlagers eine Stirnverzahnung des Axialfreilaufs ausgebildet, wodurch bei Einsatz nur eines Nabenlagers axialer Bauraum eingespart werden kann. Nachteilig ist aber, dass auch hier die Axialkräfte durch die Wälzkörper des Lagers radial in das Nabengehäuse übertragen werden müssen. Ein Freilauf muss für Drehmomentbelastungen von 400 Nm und mehr ausgelegt sein. Das bedeutet, dass im Laufe der Betriebszeit das in das Nabengehäuse eingeschraubte Bauteil mit der Stirnverzahnung immer stärker in das Nabengehäuse gedrängt wird und das Nabengehäuse dort lokal stark komprimiert. Die hohen Belastungen können zu einer lokalen Verformung des Nabengehäuses führen. Mit einer Verformung wird aber auch der Lagersitz oder die Lagerschale verformt, was erhebliche Nachteile bei der Haltbarkeit der Nabe und auch zu nachteiligen Fahreigenschaften führen kann.

Es sind auch Naben mit Zahnscheibenfreiläufen bekannt geworden, die über einen Freilauf mit einer Axialverzahnung verfügen, wobei eine Axialverzahnung fest in dem Rotor integriert ist und eine Zahnscheibe über eine oder mehrere Federn drehfest und axial verschiebbar in dem Nabengehäuse aufgenommen ist und in Richtung auf die Verzahnung in dem Rotor axial vorbelastet wird. Umgekehrt ist auch eine Nabe bekannt geworden, die einen Zahnscheibenfreilauf aufweist und bei der eine Zahnscheibe fest in das Nabengehäuse integriert ist und bei der die andere Zahnscheibe über eine Feder in Richtung auf das Nabengehäuse vorbelastet ist. Beide Nabentypen, bei denen jeweils nur eine Zahnscheibe axial beweglich ist, haben aufgrund der hohen Belastungen im sportlichen oder professionellen Radsport wieder den Nachteil, dass einige Zähne stärker belastet werden und schneller verschleißen, sodass ein frühzeitiger und regelmäßiger Austausch der Zahnscheiben, des Rotors oder sogar des Nabengehäuses empfehlenswert ist, um eine Fehlfunktion zu vermeiden.

Eine Alternative wäre es, eine Nabe mit einem Zahnscheibenfreilauf insgesamt durch Verwendung steiferer und somit schwererer Materialien oder durch den Einsatz größerer Wandstärken steifer auszugestalten, wodurch aber das Gewicht steigt. Da im sportlichen und professionellen Radsport allerdings jedes Gramm Gewicht zählt, wird dadurch nicht die gewünschte Lösung erzielt.

So ist mit der DE 10 2004 004 961 B4 eine Fahrradnabe mit einem die Nabenachse umgebenden Nabengehäuse und zwei zwischen der Nabenachse und dem Nabengehäuse angeordneten Nabenlagern, einem Freilaufkörper, zwei zwischen der Nabenachse und dem Feilaufkörper angeordneten Freilauflagern und einem Zahnscheibenfreilauf zwischen dem Nabengehäuse und dem Freilaufkörper bekannt geworden. Zur Versteifung der Nabe ist die Nabenachse im Bereich des freilaufseitigen Nabenlagers nach innen hin verdickt und auf der Außenseite ist auf die Nabenachse zwischen den Nabenlagern eine Versteifungshülse aufgesteckt, um die Gefahr der elastischen Durchbiegung zu verringern. Die bekannte Nabe funktioniert an sich und bietet eine hohe Stabilität. Nachteilig ist, dass der innere freie Durchmesser durch die Verdickung verringert wird, sodass nicht mehr alle Steckachsen verwendet werden können. Außerdem wird das Gewicht beträchtlich erhöht. Das Zusatzgewicht durch die Verdickung an sich ist recht gering, aber durch die dadurch bedingten größeren Dimensionen wird das System insgesamt erheblich schwerer.

Mit der EP 1 121 255 B1 ist eine leichte Nabe mit einem Zahnscheibenfreilauf und einer zuverlässigen Funktion bekannt geworden, wobei eine gleichmäßigere Belastung der Zähne der Zahnscheiben erfolgt. Dazu werden bei dieser Nabe zwei Zahnscheiben eingesetzt, die jeweils axial beweglich sind und die jeweils über eine Feder axial von außen aufeinander zu gedrückt werden. Dadurch werden beide Zahnscheiben schwimmend gelagert und können sich bei z. B. Durchbiegungen der Nabe oder bei sonstigen Belastungen jeweils besser zueinander ausrichten, sodass für eine gleichmäßigere Abnutzung der Zahnscheiben und einen besonders zuverlässigen Betrieb gesorgt wird. Eine noch steifere Nabe ist aber wünschenswert.

Mit der DE 10 2016 113 731 der Anmelderin ist eine leichte Nabe mit einem Zahnscheibenfreilauf und einer zuverlässigen Funktion bekannt geworden. Bei der Nabe umfasst der Zahnscheibenfreilauf eine rotorseitige Freilaufkomponente und eine nabenseitige Freilaufkomponente. Die nabenseitige Freilaufkomponente ist in das Nabengehäuse eingeschraubt und bildet einen Lagersitz für ein darin aufgenommenes Wälzlager zur Lagerung des Nabengehäuses. Dadurch kann der seitliche Abstand der beiden Wälzlager zur Lagerung des Nabengehäuses vergrößert werden, was die Steifigkeit der Nabe erhöht. In manchen Anwendungsfällen wird aber eine noch größere Steifigkeit der Nabe gewünscht, ohne das Gewicht entsprechend zu erhöhen.

Vor dem Hintergrund des Standes der Technik, ist es deshalb die Aufgabe der vorliegenden Erfindung, eine leichte Nabe zur Verfügung zu stellen, die konstruktiv noch geringere Verformungen im Betrieb ermöglicht.

Diese Aufgabe wird durch eine Nabe mit den Merkmalen des Anspruchs 1 gelöst. Bevorzugte Weiterbildungen der Erfindung sind Gegenstand der Unteransprüche. Weitere Vorteile der vorliegenden Erfindung ergeben sich aus der allgemeinen Beschreibung und der Beschreibung der Ausführungsbeispiele.

Eine erfindungsgemäße Nabe ist für wenigstens teilweise muskelbetriebene Fahrzeuge und insbesondere Zweiräder und vorzugsweise Fahrräder vorgesehen und umfasst eine hohle Nabenachse mit einer im Wesentlichen zylindrischen inneren Durchgangsöffnung zur Durchführung einer Spannachse wie z.B. eine Schnellspannachse und/oder eine Steckachse, ein mit wenigstens zwei Nabenlagern gegenüber der Nabenachse drehbar gelagertes Nabengehäuse, welches gegenüber einer Nabenachse drehbar gelagert ist. Die Nabenachse weist im Wesentlichen eine zylindrische Innenoberfläche auf. Die Nabe weist einen gegenüber der Nabenachse drehbar gelagerten Rotor zur drehfesten Anordnung wenigstens eines Ritzels auf. Es ist eine Freilaufeinrichtung mit zwei miteinander zusammenwirkenden Freilaufkomponenten umfasst, nämlich einer nabenseitigen Freilaufkomponente und einer rotorseitigen Freilaufkomponente. Die beiden Freilaufkomponenten weisen jeweils axiale Eingriffselemente zum Eingriff ineinander auf und sind in axialer Richtung relativ zueinander wenigstens zwischen einer Freilaufstellung und einer ineinander eingreifenden Eingriffsstellung bewegbar. Die nabenseitige Freilaufkomponente (und die daran ausgebildeten axialen Eingriffselemente) ist drehfest mit dem Nabengehäuse verbunden. Die rotorseitige Freilaufkomponente (und die daran ausgebildeten axialen Eingriffselemente) ist drehfest mit dem Rotor verbunden und ist in axialer Richtung relativ zu dem Rotor und dem Nabengehäuse wenigstens zwischen einer Freilaufstellung und einer Eingriffsstellung bewegbar. Das Nabengehäuse ist in einem rotorseitigen Endbereich mit einem rotorseitigen Nabenlager und in einem gegenüberliegenden Endbereich des Nabengehäuses mit wenigstens einem weiteren Nabenlager drehbar gegenüber der Nabenachse gelagert. Die rotorseitige Freilaufkomponente wird über wenigstens eine Vorbelastungseinrichtung in die Eingriffsstellung vorbelastet und die Eingriffselemente sind jeweils stirnseitig ausgebildet. Das rotorseitige Nabenlager ist in einem axialen Längsabschnitt der Nabenachse mit im Vergleich zu einem zentralen Bereich der Nabenachse vergrößerten Durchmesser an einem Lagersitz radial zwischen der hohlen Nabenachse und der rotorseitigen Freilaufkomponente aufgenommen. Der axiale Längsabschnitt ist kürzer als 30 mm. Ein lichter innerer Durchmesser der Nabenachse ändert sich über einer Länge der Nabenachse um weniger als 1,5 mm.

Vorzugsweise ist das Nabengehäuse mit zwei an gegenüberliegenden Endbereichen des Nabengehäuses angeordneten Wälzlagern gegenüber und insbesondere auf der Nabenachse drehbar gelagert.

Der Rotor ist insbesondere mit wenigstens zwei Rotorlagern gegenüber der Nabenachse und insbesondere mittels der Rotorlager auf der Nabenachse drehbar gelagert. Der Rotor ist besonders bevorzugt in axialer Richtung im Betrieb fest bzw. axial unbeweglich angeordnet.

Eine besonders bevorzugte Weiterbildung der erfindungsgemäßen Nabe ist im normalen und regelmäßigen bestimmungsgemäßen Betrieb für wenigstens teilweise muskelbetriebene Fahrzeuge und insbesondere Zweiräder und vorzugsweise Fahrräder vorgesehen und umfasst eine hohle Nabenachse mit einer im Wesentlichen zylindrischen inneren Durchgangsöffnung zur Durchführung und Aufnahme einer Spannachse, ein mit wenigstens zwei Nabenlagern gegenüber der Nabenachse drehbar gelagertes Nabengehäuse, welches mit zwei an gegenüberliegenden Endbereichen des Nabengehäuses angeordneten Wälzlagern auf einer Nabenachse drehbar gelagert ist. Die Nabe weist einen mit wenigstens zwei Rotorlagern auf der Nabenachse drehbar gelagerten Rotor zur drehfesten Anordnung wenigstens eines Ritzels auf. Der Rotor ist in axialer Richtung im Betrieb fest bzw. axial unbeweglich angeordnet. Es ist eine Freilaufeinrichtung mit zwei miteinander zusammenwirkenden Freilaufkomponenten umfasst, nämlich einer nabenseitigen Freilaufkomponente und einer rotorseitigen Freilaufkomponente. Die beiden Freilaufkomponenten weisen jeweils axiale Eingriffselemente zum Eingriff ineinander auf und sind in axialer Richtung relativ zueinander wenigstens zwischen einer Freilaufstellung und einer ineinander eingreifenden Eingriffsstellung bewegbar. Die nabenseitige Freilaufkomponente und damit die daran ausgebildeten axialen Eingriffselemente sind drehfest und axial fest mit dem Nabengehäuse verbunden. Die rotorseitige Freilaufkomponente und damit auch die daran ausgebildeten axialen Eingriffselemente sind drehfest mit dem Rotor verbunden. Die rotorseitige Freilaufkomponente ist in axialer Richtung relativ zu dem Rotor und dem Nabengehäuse wenigstens zwischen einer Freilaufstellung und einer Eingriffsstellung bewegbar. Das Nabengehäuse ist in einem rotorseitigen Endbereich mit einem rotorseitigen Nabenlager und in einem dem rotorseitigen Endbereich gegenüberliegenden Endbereich des Nabengehäuses mit wenigstens einem weiteren Nabenlager drehbar gegenüber der Nabenachse gelagert. Das rotorseitige Nabenlager ist in einem axialen Längsabschnitt der Nabenachse mit im Vergleich zu einem zentralen Bereich der Nabenachse vergrößerten Durchmesser an einem Lagersitz radial zwischen (d. h. in der radialen Richtung zwischen) der hohlen Nabenachse und der rotorseitigen Freilaufkomponente aufgenommen.

Eine Spannachse ist insbesondere als Schnellspannachse und/oder als Steckachse ausgebildet.

Die erfindungsgemäße Nabe hat viele Vorteile. Die erfindungsgemäße Nabe ermöglicht einen sehr steifen und dennoch leichten Aufbau und ist flexibel anwendbar. Durch eine axialen Längsabschnitt mit vergrößertem Durchmesser, an dem der Lagersitz für das rotorseitige Nabenlager ausgebildet ist, wird eine deutlich erhöhte Steifigkeit erreicht. Lastspitzen können stark verringert (Faktor 1,5 oder 2 oder 3 und mehr) und die Haltbarkeit vergrößert werden. Dadurch wird bei einem sehr geringen Gesamtgewicht die Belastbarkeit deutlich erhöht. Durch den sich wenig ändernden und vorzugsweise konstanten lichten inneren Durchmesser der Nabenachse kann eine sehr stabile Abstützung erfolgen. Eine bzw. die Spannachse kann die Nabenachse in einem bedeutenden Maße unterstützen und von innen abstützen.

Ein erheblicher Vorteil ist auch, dass auch bei erheblichen Überlasten, welche im normalen Betrieb eines Fahrrades nur in Ausnahmesituationen auftreten, ein sicherer Betrieb gewährleistet wird. Gerade bei z. B. Fahrrädern mit elektrischer Unterstützung und auch bei professionell genutzten Fahrrädern kommt es häufiger zu solchen Überlasten einer normal ausgelegten Nabe. Darum ist eine erfindungsgemäße Nabe vorteilhaft, da diese (gewichtsoptimiert) den höheren Belastungen Stand hält.

Eine geringe Verformung bzw. Achsdurchbiegung bei hohen Belastungen und insbesondere Überlasten ist wichtig für die Zuverlässigkeit der Freilauffunktion und auch die Präzision des Schaltvorgangs. Ein auf dem Rotor angebrachtes Ritzel läuft am Außendurchmesser unrund, wenn sich die Achse verbiegt. Mit größer werdenden Ritzeln und höheren Kräften an der Kette wird dies noch kritischer. Das ist zur Absicherung von Überlasten ein wichtiger Vorteil. Gerade auch - aber nicht nur - bei Fahrrädern mit Elektrounterstützung.

Ein bedeutender Vorteil ist, dass eine innere zylindrische Durchgangsöffnung zur Verfügung steht, die an den Außendurchmesser einer Spannachse angepasst bzw. darauf abgestimmt werden kann. Dabei weist die Nabenachse erfindungsgemäß im Wesentlichen oder vorzugsweise (nahezu) vollständig eine zylindrische Innenoberfläche auf. Beispielsweise kann der lichte innere Durchmesser 12 mm betragen. Prinzipiell sind auch größere innere Durchmesser von 13 mm, 14 mm oder sogar 15 mm oder 16 mm oder 18 mm oder 20 mm oder mehr möglich. Der innere Durchmesser kann auch deutlich größer werden.

Der maximale Durchmesser wird heute meist von der Gestaltung des Rotorkörpers bzw. des Freilaufkörperstandards und der Größe des kleinsten Ritzels begrenzt. Wenn die Nabe statt eines Rotors und darauf montieren Ritzeln bzw. eines Ritzelpaketes z. B. mit einem Zahnriemen angetrieben wird, so können auch andere Durchmesser ermöglicht werden.

Besonders bevorzugt ändert sich ein lichter innerer Durchmesser der Nabenachse über einer Länge und insbesondere über der vollständigen Länge der Nabenachse um weniger als 20% und insbesondere weniger als 15% und bevorzugt weniger als 10%. Die Länge der Nabenachse umfasst den Bereich des Nabengehäuses und auch den Bereich des Rotors und somit insbesondere die vollständige Längserstreckung der Nabenachse. Vorzugsweise ändert sich ein lichter innerer Durchmesser der Nabenachse über einer vollständigen Länge der Nabenachse um weniger 2,5 mm oder 2,0 mm und insbesondere um weniger als 1,5 mm oder 1 mm.

Besonders bevorzugt ist die Nabenachse weitestgehend zylindrisch ausgebildet. Durch die weitestgehend zylindrisch ausgebildete Innenform der Nabenachse kann z. B. eine Steckachse mit standardisiertem Durchmesser (passgenau) aufgenommen werden. Ein Durchmesserunterschied zwischen Spannachse und lichtem Durchmesser der Durchgangsöffnung kann 0,2 mm oder 0,1 mm oder 0,05 mm oder weniger betragen. Dann stützen sich die Spannachse und die Nabenachse im Betrieb schon bei äußerst geringen oder geringen Durchbiegungen gegenseitig über praktisch die vollständige Länge der Nabenachse ab. Eine gegenseitige Abstützung liegt vorzugsweise jedenfalls dann vor, wenn eine tatsächliche Durchbiegung bei hohen Belastungen auftritt bzw. auftreten würde. Die Konstruktion sorgt nun schon bei kleinen und mittleren und auch bei sehr hohen oder schlagartigen Belastungen für eine besonders steife Ausgestaltung. Auch bei hohen und höchsten Belastungen treten nur äußerst geringe Verformungen auf. Ein wesentlicher Vorteil der Nabe wird dadurch erreicht, dass nur im Bereich des rotorseitigen Nabenlagers ein axialer Längsabschnitt mit vergrößerten Außendurchmesser vorhanden ist, an dem der Lagersitz für den inneren Lagerring des als Wälzlagers ausgebildeten rotorseitigen Nabenlagers ausgebildet ist. Der Lagersitz für den äußeren Lagerring des rotorseitigen Nabenlagers ist vorzugsweise direkt in der nabenseitigen Freilaufkomponente ausgebildet. Das durch den vergrößerten Außendurchmesser im axialen Längsabschnitt verursachte Zusatzgewicht ist sehr klein.

Und tatsächlich kann das Gesamtgewicht der Nabe bei der gleichen oder bei insgesamt erhöhter Stabilität sogar reduziert werden, da die Wandstärken der Nabenachse z. B. in dem zentralen Bereich und in den äußersten Endbereichen reduziert werden können. Insgesamt wird eine Belastung der Nabe gleichmäßiger verteilt.

Erfindungsgemäß weist die innere Durchgangsöffnung der Nabenachse eine (wenigstens im Wesentlichen) zylindrische Innenoberfläche auf.

In bevorzugten Weiterbildung ist der axiale Längsabschnitt kürzer kürzer als 25 mm ausgebildet. Die axiale Länge liegt in einer bevorzugten Ausgestaltung bei etwa 20 mm.

Vorzugsweise sind auf der Nabenachse zwei und insbesondere genau zwei radiale Verdickungen ausgebildet. Die zwei radialen Verdickungen sind vorzugsweise im Bereich der Wälzlager zur Lagerung des Nabengehäuses ausgebildet. Vorzugsweise weisen die radialen Verdickungen auf der axial nach innen gerichteten Seite einen (kontinuierlichen oder graduellen oder stufenlosen oder gestuften) Anstieg der Wandstärke auf und an der axial äußeren Seite ist jeweils ein Absatz ausgebildet. Diese Absätze können als Anschlag für den inneren Lagerring der Wälzlager zur Lagerung des Nabengehäuses dienen. Gegebenenfalls kann zwischen den Anschlag und das Wälzlager ein Abstandshalter wie eine Scheibe oder eine Hülse eingebracht werden. In allen diesen Ausgestaltungen kann Kraft über die Nabenachse und die Abstandshalter wie Scheiben, Hülsenkörpern und inneren Lagerschalen der Wälzlager übertragen werden.

Der axiale Längsabschnitt umfasst vorzugsweise die radiale Verdickung auf der Rotorseite des Nabengehäuses. Eine axiale Länge des axialen Längsabschnitts ohne den Bereich der radialen Verdickung beträgt vorzugsweise weniger als 20 mm und insbesondere weniger als 15 mm.

Eine axiale Länge des Lagersitzes für den inneren Lagerring auf dem axialen Längsabschnitt beträgt vorzugsweise weniger als 15 mm und kann in einer konkreten Ausführung bei etwa 10 mm liegen.

Besonders bevorzugt ist die Nabenachse zylindrisch ausgestaltet und weist abgesehen von dem Lagersitz an dem axialen Längsabschnitt und den radialen Verdickungen, an denen die Wälzlager zur Lagerung des Nabengehäuses anliegen, einen im Wesentlichen konstanten Durchmesser und eine im wesentliche konstante Wandstärke auf, wobei der Durchmesser und die Wandstärke sich um weniger als 25% und vorzugsweise um weniger als 15% ändern. Im Inneren ist die Nabenachse besonders bevorzugt exakt zylindrisch ausgebildet.

Vorzugsweise liegen die an den gegenüberliegenden Endbereichen des Nabengehäuses angeordneten Wälzlager jeweils mit ihrem Innenring axial nach innen hin an den radialen Verdickungen der Nabenachse an. Dadurch wird die Nabenachse zur formschlüssigen Kraftübertragung eingesetzt.

Vorzugsweise beträgt in dem axialen Längsabschnitt eine Wandstärke an dem Lagersitz zwischen 2 mm und 5mm oder 4 mm. In einer bevorzugten Ausgestaltung liegt die Wandstärke an dem Lagersitz an dem axialen Längsabschnitt zwischen 2 mm und 3 mm und in einer konkreten Ausgestaltung bei 2,5 mm (+/- 10%).

In vorteilhaften Ausgestaltungen ist in dem zentralen Bereich eine Wandstärke der Nabenachse kleiner 2,5 mm und insbesondere kleiner gleich 2,0 mm. Vorzugsweise ist die Wandstärke in dem zentralen Bereich größer 0,75 mm und insbesondere größer 1,0 mm. In einer konkreten Ausgestaltung liegt die Wandstärke in dem zentralen Bereich bei 1,5 mm (+/- 20%).

Besonders bevorzugt weist die Nabenachse außerhalb der radialen Verdickungen und des axialen Längsabschnitts eine (nahezu) konstante Wandstärke auf. In dem Bereich der radialen Verdickungen ist die Wandstärke vorzugsweise kleiner 5 mm (+/-10%) und kann z. B. etwa 4 mm betragen.

Ein Außendurchmesser der Nabenachse beträgt insbesondere in dem axialen Längsabschnitt zwischen 15 mm und 20 mm, vorzugsweise etwa 17 mm. In dem zentralen Bereich der Nabenachse beträgt ein Außendurchmesser der Nabenachse insbesondere zwischen 10 mm und 15 mm, vorzugsweise etwa 12 mm, besonders bevorzugt minimal größer als 12 mm.

Vorzugsweise weist das rotorseitige Nabenlager einen Außendurchmesser zwischen 25 mm und 32 mm und insbesondere zwischen 26 mm und 30 mm und eine Breite zwischen 5 mm und 8 mm oder 10 mm auf. In einer konkreten Ausgestaltung liegt der Außendurchmesser bei etwa 28 mm und die Breite beträgt etwa 7 mm.

In bevorzugten Ausgestaltungen ist die Spannachse umfasst und/oder die Nabe ist für den Einsatz definierter Spannachsen (und Spannachsensysteme) ausgebildet und vorgesehen.

Besonders bevorzugt weist die Spannachse wenigstens im Bereich des Nabengehäuses und des Rotors eine im Wesentlichen zylindrische Außenoberfläche auf. Das bedeutet insbesondere, dass die Spannachse im Inneren der Nabe eine im Wesentlichen zylindrische und vorzugsweise nahezu vollständig zylindrische oder auch vollständig zylindrische Außenoberfläche aufweist.

In vorteilhaften Ausgestaltungen weicht eine Außenoberfläche der Spannachse im Bereich des Nabengehäuses und des Rotors (also insbesondere im Inneren der Nabe) an mehreren Stellen über dem Umfang verteilt oder über den vollständigen Umfang radial um weniger als 0,2 mm und insbesondere um weniger als 0,1 mm von der zylindrischen Form ab. Es ist auch möglich, dass eine radiale Abweichung von weniger als 0,05 oder 0,02 mm oder auch 0,01 mm erzielt wird.

Insbesondere sind der Innendurchmesser der Nabenachse und der Außendurchmesser der Spannachse aufeinander abgestimmt und vorzugsweise aneinander angepasst.

Vorzugsweise beträgt ein maximaler radialer Abstand zwischen der Spannachse und der Nabenachse weniger als 0,4 mm. Insbesondere beträgt ein maximaler radialer Abstand zwischen der Spannachse und der Nabenachse weniger als 0,2 mm und besonders bevorzugt weniger als 0,1 mm oder weniger als 0,05 oder sogar 0,02 mm oder auch 0,01 mm. Diese Maße gelten über der Länge der Spannachse und der Nabenachse abgesehen von den Endbereichen und von eventuell vorhandenen umlaufenden Nuten in der Nabenachse oder umlaufenden Nuten in der Spannachse oder wenigstens einem eventuell vorhandenen Gewinde an der Spannachse.

In anderen bevorzugten Ausgestaltungen weist die Spannachse nicht über der vollständigen Länge, sondern (nur) in wenigstens einem Längsbereich oder in zwei oder mehr Längsbereichen wenigstens im Bereich des Nabengehäuses und/oder des Rotors eine im Wesentlichen zylindrische Außenoberfläche auf. Das bedeutet insbesondere, dass die Spannachse im Inneren der Nabe über den Längsbereich eine im Wesentlichen zylindrische und vorzugsweise nahezu vollständig zylindrische oder auch vollständig zylindrische Außenoberfläche aufweist.

In vorteilhaften Ausgestaltungen weicht eine Außenoberfläche der Spannachse in dem Längsbereich (insbesondere im Inneren der Nabe) radial um weniger als 0,2 mm und insbesondere um weniger als 0,1 mm von der zylindrischen Form ab. Es ist auch möglich, dass eine radiale Abweichung von weniger als 0,05 oder 0,02 mm oder auch 0,01 mm erzielt wird.

Vorzugsweise beträgt ein maximaler radialer Abstand zwischen der Spannachse und der Nabenachse in dem Längsbereich weniger als 0,4 mm. Insbesondere beträgt ein maximaler radialer Abstand zwischen der Spannachse und der Nabenachse in dem Längsbereich weniger als 0,2 mm und besonders bevorzugt weniger als 0,1 mm oder weniger als 0,05 oder sogar 0,02 mm oder auch 0,01 mm. Diese Maße gelten nur in dem Längsbereich bzw. den Längsbereichen.

Vorzugsweise wird die nabenseitige Freilaufkomponente mit dem Nabengehäuse fest aber lösbar verbunden. Insbesondere wird die nabenseitige Freilaufkomponente in das Nabengehäuse eingeschraubt. Besonders bevorzugt verfügt die Schraubverbindung zwischen dem Nabengehäuse und der nabenseitigen Freilaufkomponente über wenigstens zwei Gewindegänge. Das Nabengehäuse und die nabenseitige Freilaufkomponente sind dann miteinander verschraubt, wobei die Gewinde an dem Nabengehäuse und/oder der nabenseitigen Freilaufkomponente vorzugsweise jeweils über wenigstens zwei separate und axial voneinander beabstandete Gewindegänge verfügen. Durch eine solche Konstruktion wird eine größere Steigung der Gewindegänge ermöglicht. Der Steigungswinkel ist größer und damit ist die im verschraubten Zustand wirksame Axialkraft geringer. Dadurch wird weniger Druck auf das Nabengehäuse ausgeübt.

Möglich ist es, dass die Anzahl der Gewindegänge an der nabenseitigen Freilaufkomponente und am Nabengehäuse unterschiedlich ist, sofern die Form und Anordnung der Gewindegänge entsprechend passend ist. Beispielsweise kann die nabenseitige Freilaufkomponente ein mehrgängiges Außengewinde mit zwei Gewindegängen und z. B. einer umlaufenden Rechtecknut aufweisen, sodass drei umlaufende Strukturen vorhanden sind. Eine solche Struktur kann in ein Innengewinde mit drei Gewindegängen eingeschraubt werden, auch wenn dann nur zwei Gewindegänge greifen und zur Stabilität beitragen.

Es ist besonders bevorzugt, dass die rotorseitige Freilaufkomponente axial weiter außen angeordnet ist als die nabenseitige Freilaufkomponente. Insbesondere grenzen die nabenseitige Freilaufkomponente und die rotorseitige Freilaufkomponente im Eingriffszustand axial aneinander an. Besonders bevorzugt greifen die Freilaufkomponenten axial und nicht radial ineinander ein. Vorzugsweise umgeben sich die beiden Freilaufkomponenten im Eingriffsbereich nicht.

In allen Ausgestaltungen ist es bevorzugt, dass wenigstens ein Gewindegang eine Steigung von wenigstens 1,8 mm oder 2,0 mm oder von wenigstens 2,5 mm und insbesondere von wenigstens 3 mm und vorzugsweise von wenigstens 3,5 mm oder von 4 mm oder von 5 mm oder von 6 mm oder mehr aufweist. Insbesondere ist die Steigung größer als die Anzahl der Gewindegänge multipliziert mit 1,0 mm und vorzugsweise 1,5 mm. Die Steigung ist folglich bei zwei Gewindegängen vorzugsweise größer 2 mm (3 mm) und bei drei Gewindegängen vorzugsweise größer 3 mm (4,5 mm).

Es kann bei einer Steigung, die größer ist (z. B. 1,5 mm oder 2 mm) als im Stand der Technik (z. B. 1 mm) dennoch ein feineres Gewinde eingesetzt werden, wodurch der Gewindering noch besser in dem Nabengehäuse geführt wird. Dadurch wird die Freilaufkomponente noch besser zentriert. Außerdem sind die Axialkräfte aufgrund der geänderten geometrischen Bedingungen geringer.

Im Betrieb wird die nabenseitige Freilaufkomponente durch das Antriebsdrehmoment in Verschraubungsrichtung gedrängt, wodurch die Antriebskräfte zu einem zunehmenden Druck auf das Nabengehäuse und innerhalb des Nabengehäuses führen. Das Nabengehäuse wird aber aus Gewichtsgründen regelmäßig aus einem leichten Material gefertigt. Zudem werden die Wandstärken möglichst weit reduziert, um das Gewicht und den Luftwiderstand (geringere Querschnittsfläche) zu verringern.

Beides führt dazu, dass sich das Nabengehäuse aus dem Stand der Technik durch die auftretenden Belastungen lokal verformen kann. Bei fehlerhafter oder knapper Dimensionierung kann es bei hohen Belastungen zum Bruch des Nabengehäuses aus dem Stand der Technik kommen, wodurch eine hohe Verletzungsgefahr besteht. Die Alternative eines festeren Werkstoffs führt zu mehr Gewicht oder deutlich höheren Kosten.

Diese Weiterbildungen sind vorteilhaft, da die wirksamen Axialkräfte spürbar reduziert werden. Durch ein zweigängiges (oder dreigängiges) oder n-faches Gewinde wird der Steigungswinkel verdoppelt (verdreifacht) oder mit "n" multipliziert, während die Teilung gleich bleibt. Insgesamt sind die in axialer Richtung axial nach innen in das Nabengehäuse wirkenden Kräfte erheblich geringer, sodass keine oder doch wenigstens eine deutlich geringere Verformung des Nabengehäuses auftritt. Die Wandstärke kann reduziert werden und gleichzeitig kann die Sicherheit erhöht werden. Die Kräfte zur Deformierung des Lagersitzes sind kleiner. Damit werden bei hohen Belastungen bessere Fahreigenschaften erzielt.

Die Selbsthemmung wird reduziert, was ebenfalls vorteilhaft für die Belastung ist. Die Selbsthemmung des Gewindes ist aber noch groß genug. Ein eigenständiges Lösen muss nicht befürchtet werden. Außerdem ist das Lösen erheblich einfacher, wenn eine nabenseitige Freilaufkomponente entfernt oder getauscht werden muss.

Insgesamt werden mit der Erfindung das Gesamtgewicht und der Luftwiderstand verringert, außerdem nimmt die Belastbarkeit zu.

Insbesondere besteht das Nabengehäuse wenigstens teilweise oder vollständig aus einer Leichtmetalllegierung wie z. B. einer Alumniumlegierung und/oder einer Magnesiumlegierung und/oder Carbon und/oder faserverstärktem Kunststoff.

Vorzugsweise sind in dem Nabengehäuse (wenigstens) ein Befestigungsabschnitt und (wenigstens) ein Zentrierabschnitt ausgebildet. An der nabenseitigen Freilaufkomponente sind insbesondere (wenigstens) ein Befestigungsbereich und (wenigstens) ein Zentrierbereich ausgebildet. Der Befestigungsbereich ist dann mit dem Befestigungsabschnitt verbunden und insbesondere verschraubt und der Zentrierbereich wird an dem Zentrierabschnitt zentriert.

Ein erheblicher Vorteil einer solchen Weiterbildung besteht weiterhin in der definierten Aufnahme der nabenseitigen Freilaufkomponente in dem Nabengehäuse. Dadurch wird die Reproduzierbarkeit beim Aufbau eines Laufrades und beim Austausch von Komponenten der Nabe erheblich verbessert. Es hat sich bei Versuchen der Anmelderin mit Naben, bei denen der Lagersitz eines Wälzlagers an der Freilaufkomponente ausgebildet ist, herausgestellt, dass beim Austausch von Nabenkomponenten es zu nicht unerheblichen Zentrierfehlern des Laufrades kam. Bedenkt man, dass z. B. beim Einsatz von Felgenbremsen nur ein geringer Spalt zwischen dem Bremsbelag und der Bremsflanke vorliegt, kann ein solcher Zentrierfehler ganz erhebliche Auswirkungen haben.

Soll aus Wartungsgründen beispielsweise die nabenseitige Freilaufkomponente oder ein darin definiert aufgenommenes oder eingepresstes Wälzlager ausgetauscht werden, so kann es erforderlich werden, das ganze Laufrad neu zu zentrieren. Eine erhebliche Ursache für derartige Zentrierfehler liegt z. B. bei in das Nabengehäuse eingeschraubten nabenseitigen Freilaufkomponenten daran, dass eine Schraubverbindung keine exakte Zentrierung gewährleistet. Die exakte radiale Position der nabenseitigen Freilaufkomponente hängt von den Fertigungstoleranzen im Allgemeinen und im Speziellen auch von der Fertigung und Art des Gewindes ab. So kann bei an sich gleichen nabenseitigen Freilaufkomponenten der Anfang des Gewindes aufgrund der Gewindesteigung leicht versetzt sein. Unter anderem das kann beim Einschrauben unterschiedlicher (aber an sich gleich gefertigter) nabenseitiger Freilaufkomponenten zu einem geringen radialen Versatz und einer gegebenenfalls etwas unterschiedlichen Orientierung führen. Aufgrund der radial unterschiedlichen Abmessungen von nabenseitiger Freilaufkomponente und Nabengehäuse können unterschiedliche radiale Positionen eingenommen werden, auch wenn die nabenseitige Freilaufkomponente z. B. fest in das Nabengehäuse eingeschraubt ist.

Derartige auch schon minimale Unterschiede werden aufgrund der unterschiedlichen Durchmesser von Nabe (bzw. nabenseitiger Freilaufkomponente) und Laufrad erheblich verstärkt und sorgen dort für entsprechend verstärkte Ausschläge, die zu einer ungenügenden Zentrierung eines Laufrades führen können, wenn z. B. im Inneren der Nabe Teile getauscht werden. Dann kann eine vollständige Neuzentrierung oder eine Demontage und anschließende neue Montage nötig werden.

Es ist sehr vorteilhaft, dass ein Befestigungsbereich der Freilaufkomponente mit dem Befestigungsabschnitt der Nabe verbunden wird und dass ein Zentrierbereich der Freilaufkomponente an dem Zentrierabschnitt der Nabe geführt oder zentriert wird. Die Abweichungen beim Aufbau und Austausch von Nabenteilen können dadurch erheblich reduziert werden.

Durch die Integration eines Wälzlagers in die nabenseitige Freilaufkomponente kann der seitliche axiale Abstand der Wälzlager zur Lagerung des Nabengehäuses erheblich größer gewählt werden. Dadurch kann auch die Seitensteifigkeit eines damit ausgerüsteten Rades erheblich verbessert werden.

Der Rotor und auch das Nabengehäuse sind in der Freilaufstellung und in der Eingriffsstellung in den gleichen axialen Positionen angeordnet. In der Eingriffsstellung ist ein Antriebsdrehmoment in Antriebsdrehrichtung von dem Rotor auf das Nabengehäuse übertragbar. In der Freilaufstellung sind der Rotor und das Nabengehäuse vorzugsweise voneinander entkoppelt, wobei dann in der Freilaufstellung kein oder praktisch kein wesentliches Drehmoment zwischen Nabengehäuse und Rotor übertragen wird.

Die axialen Eingriffselemente stehen insbesondere axial hervor und/oder wirken in axialer Richtung.

Die nabenseitige Freilaufkomponente ist ein separates Teil und ist nicht einstückig mit dem Nabengehäuse ausgebildet, da ein Nabengehäuse meist aus einer oder mehreren Komponenten aus einem leichten Material oder aus mehreren leichten Materialien wie Leichtmetall oder Faserverbundwerkstoff besteht, während die Freilaufkomponente wenigstens zum Teil aus (wenigstens) einem festeren und somit meist schwereren Material gefertigt ist.

Beispielsweise eignet sich Stahl als Material für die Freilaufkomponente.

Bei einem nacheinander erfolgenden Einbau von zwei Exemplaren nabenseitiger Freilaufkomponenten (z. B. bei einer Wartung) wird die radiale Positionierung durch den Zentrierabschnitt definiert und erfolgt weitestgehend gleich. Es wird bei unterschiedlichen Exemplaren eine gleiche radiale Positionierung erreicht. Unterschiede einer Ausrichtung oder bei der Zentrierung eines Laufrades werden so weitestgehend vermieden. Auch nach dem Austausch von nabenseitigen Freilaufkomponenten und/oder Wälzkörpern oder Wälzlagern kann ein Laufrad direkt benutzt werden und muss nicht erst nachzentriert oder sogar demontiert werden.

Vorzugsweise ist eine radiale Toleranz oder ein radiales Spiel zwischen der nabenseitigen Freilaufkomponente und dem Nabengehäuse an dem Befestigungsabschnitt größer als an dem Zentrierabschnitt. Unter einer radialen Toleranz wird hier auch ein Spiel verstanden. So können sich (ohne den Zentrierabschnitt) an dem Befestigungsabschnitt radial unterschiedliche Positionen ergeben, abhängig von den Toleranzen und von der Fertigung.

Im zusammengebauten Zustand liegt kein tatsächliches Spiel mehr vor, da die nabenseitige Freilaufkomponente fest mit dem Nabengehäuse verbunden ist. Die sich ergebende jeweilige tatsächliche radiale Positionierung hängt aber von den vorhandenen Toleranzen bzw. dem Spiel vor dem Einbau ab. Je nach Montage und verwendeter Komponente (innerhalb der zulässigen Herstellungstoleranzen) kann sich eine unterschiedliche radiale Positionierung ergeben, die zwar absolut nur geringfügig schwankt, sich aber durch die Hebelwirkung erheblich verstärkt auswirkt.

In bevorzugten Ausgestaltungen ist die radiale Toleranz (das radiale Spiel) zwischen der nabenseitigen Freilaufkomponente und dem Nabengehäuse an dem Zentrierabschnitt weniger als halb so groß wie an dem Befestigungsabschnitt. Insbesondere ist die radiale Toleranz an dem Zentrierabschnitt kleiner als 1/4 der radialen Toleranz an dem Befestigungsabschnitt.

In bevorzugten Weiterbildungen liegt an dem Zentrierabschnitt eine Spielpassung mit weniger als 20 um radialer Toleranz oder Spiel und insbesondere einer radialen Toleranz kleiner als 10 um und vorzugsweise kleiner 5 um oder sogar kleiner 3 um vor.

In besonders bevorzugten Ausgestaltungen wird an dem Zentrierabschnitt und dem Zentrierbereich eine Übergangspassung ausgebildet. Das bedeutet, dass je nach aktueller Fertigung eine leichte Spielpassung oder eine (vorzugsweise leichte) Presspassung vorliegen kann. Je nach tatsächlicher Abmessungen kann ein geringes Untermaß oder Übermaß vorliegen.

Unter einem "Zentrierbereich" und einem "Befestigungsbereich" werden gegenständliche Abschnitte oder Teile eines Körpers verstanden.

In weiteren bevorzugten Ausgestaltungen ist an dem Zentrierabschnitt und dem Zentrierbereich eine Presspassung oder eine Übermaßpassung ausgebildet. Dabei ist das innere Teil immer größer als das äußere Teil. Bei der Montage wird das äußere Teil (hier in der Regel das Nabengehäuse) leicht gedehnt. Bevorzugterweise liegt ein Übermaß im Bereich zwischen 0 um und etwa 20 um, insbesondere bei etwa 5 um +/-5 µm.

Bi einer Presspassung (und auch bei einer Übergangspassung) kann eine exakt definierte Orientierung der nabenseitigen Freilaufkomponente und damit auch des Wälzlagers bzw. der Wälzkörper erreicht werden. Auch nach einer Demontage und anschließender Wiedermontage der Nabe mit gleichen oder ausgetauschten Komponenten ist eine Nacharbeit bei der Zentrierung nicht nötig. Es wird insbesondere bei einem Komponentenaustausch vermieden, dass sich die Felge um mehrere zehntel oder gegebenenfalls auch nur 1/10 oder 2/10 Millimeter axial verschiebt.

In besonders bevorzugten Ausgestaltungen verfügen der Befestigungsabschnitt und der Befestigungsbereich jeweils über Gewinde mit zwei, drei oder mehr zueinander passenden Gewindegängen, welche miteinander verschraubt sind. Vorzugsweise verfügt der Befestigungsbereich über ein (mehrgängiges) Außengewinde, welcher in ein (mehrgängiges) Innengewinde an dem Befestigungsabschnitt des Nabengehäuses eingeschraubt ist. Es ist aber auch möglich, dass die Freilaufkomponente mit einem Innengewinde auf einen Stummel des Nabengehäuses aufgeschraubt ist. In allen Ausgestaltungen ist es besonders bevorzugt, dass die Gewindegänge parallel und benachbart zueinander verlaufen, wobei sich der 1. Gewindegang und der 2. Gewindegang in axialer Richtung nacheinander abwechseln.

In allen Ausgestaltungen ist es bevorzugt, dass die nabenseitige Freilaufkomponente einen axialen Körperabschnitt umfasst.

Vorzugsweise weist das Nabengehäuse wenigstens einen Absatz zum Abstützen der nabenseitigen Freilaufkomponente und/oder eines Wälzlagers auf. Es ist möglich, dass zwischen einem Absatz in dem Nabengehäuse und der nabenseitigen Freilaufkomponente eine Ringscheibe angeordnet ist.

Dann weist die insbesondere Ringscheibe eine größere Kontaktfläche mit dem Nabengehäuse auf als mit der nabenseitigen Freilaufkomponente. Die Kontaktfläche mit dem Nabengehäuse ist vorzugsweise mindestens 25% und vorzugsweise wenigstens 50% und besonders bevorzugt wenigstens 75% größer als die Kontaktfläche mit der nabenseitigen Freilaufkomponente. Dadurch kann eine effektive Druckverteilung auf das Nabengehäuse erreicht werden, die die lokale Belastung am Nabengehäuse reduziert.

Dazu besteht die Ringscheibe bevorzugt aus einem härten Material als das Nabengehäuse und/oder aus einem härten Material als Aluminium. Die Ringscheibe besteht vorzugsweise wenigstens teilweise oder auch vollständig aus einem Material wie z. B. Stahl.

Es ist möglich, dass der Zentrierbereich einen größeren Außendurchmesser aufweist als der Befestigungsbereich. In einer solchen Ausgestaltung ist es möglich und bevorzugt, dass die nabenseitige Freilaufkomponente einen nach außen ragenden Fortsatz umfasst, der sich von dem axialen Körperabschnitt aus (radial oder auch schräg) nach außen erstreckt. Der Zentrierbereich ist dann vorzugsweise (radial außen) an dem Fortsatz ausgebildet.

Insbesondere ist dann an der axialen Innenseite des Fortsatzes ein Anschlag ausgebildet ist, der im montierten Zustand an einem radialen Absatz des Nabengehäuses anliegt.

Möglich ist es auch, dass an einer Stirnseite des axialen Körperabschnitts ein Anschlag ausgebildet ist, der im montierten Zustand an dem Absatz (einem radialen Absatz) des Nabengehäuses anliegt.

Ein Vorteil solcher Ausgestaltungen mit einem Anschlag besteht darin, dass die nabenseitige Freilaufkomponente im bestimmungsgemäßen Zusammenbau an dem bzw. einem radialen Absatz des Nabengehäuses anliegt. Dadurch wird auch bei einem Einschrauben der nabenseitige Freilaufkomponente eine ausreichend stabile Abstützung im Nabengehäuse erzielt. Bei einer solchen Gestaltung wird zuverlässig verhindert, dass sich die nabenseitige Freilaufkomponente im Betrieb immer weiter in das Nabengehäuse hineinzieht.

Die nabenseitige Freilaufkomponente umfasst in allen Ausgestaltungen insbesondere einen sich von dem axialen Körperabschnitt aus nach innen erstreckenden Ringflansch. Der Ringflansch erstreckt sich insbesondere am axial äußeren Ende des axialen Körperabschnitts radial nach innen hin. An der axialen Außenseite des Ringflansches sind vorzugsweise die Eingriffselemente insbesondere in Form einer Axialverzahnung ausgebildet. An dem Ringflansch kann auch wenigstens eine Werkzeugkontur ausgebildet sein, die mit einem separaten Werkzeug gegriffen werden kann, um die nabenseitige Freilaufkomponente zu montieren und/oder zu demontieren.

In vorteilhaften Weiterbildungen umfasst die nabenseitige Freilaufkomponente den axialen Körperabschnitt mit einem inneren zentrischen Aufnahmeraum und einem daran ausgebildeten Lagersitz und einem daran aufgenommenen Wälzlager zur drehbaren Lagerung des Nabengehäuses. Das Wälzlager umfasst dabei Wälzkörper. Vorzugsweise liegt das Wälzlager an einer gegebenenfalls vorhandenen Ringscheibe an.

Ein weiterer Vorteil ist, dass auch der Abstand der beiden Rotorlager zueinander vergrößert werden kann, sodass auch dort eine größere Steifigkeit erzielt wird. Sehr vorteilhaft ist auch, dass die Nabe noch einfacher aufgebaut ist. Es ist nicht nötig, die Nabenachse zur Erhöhung der Steifigkeit nach innen hin zu verdicken.

Gleichzeitig kann mit der Erfindung die Nabe insgesamt deutlich leichter aufgebaut werden und diese dazu noch eine größere Steifigkeit aufweisen. Ein Gewichtsvorteil wird dadurch erzielt, dass die nabenseitige Freilaufkomponente leichter ausgestaltet wird. Ein weiterer Gewichtsvorteil wird dadurch erzielt, dass das Nabengehäuse bzw. die Nabenhülse und Teile der Nabenachse dünnwandiger ausgebildet werden können.

In einer bevorzugten Weiterbildung werden die beiden Freilaufkomponenten über wenigstens eine Vorbelastungseinrichtung in die Eingriffsstellung vorbelastet. Die Freilaufkomponenten weisen vorzugsweise jeweils (an beiden Freilaufkomponenten) stirnseitig ausgebildete Eingriffselemente auf, welche in der Eingriffsstellung ineinander eingreifen. Dadurch übertragen die Eingriffselemente in der Eingriffsstellung eine Drehbewegung in Antriebsrichtung von dem Rotor auf das Nabengehäuse. In der Freilaufstellung ist eine Relativdrehung der Freilaufkomponenten zueinander und damit auch des Nabengehäuses zu dem Rotor möglich. Insbesondere wird die rotorseitige Freilaufkomponente durch die Vorbelastungseinrichtung in Richtung der nabenseitigen Freilaufkomponente gedrängt.

In allen Ausgestaltungen ist es bevorzugt, dass die Freilaufkomponenten jeweils eine Axialverzahnung aufweisen. Die Freilaufeinrichtung ist insbesondere als Zahnscheibenfreilauf ausgebildet. Als Eingriffselemente dienen dann vorzugsweise Axialzähne, die insbesondere über wenigstens eine Feder oder eine Mehrzahl von Federn oder Federelementen in die Eingriffsstellung vorbelastet werden. Insbesondere beträgt die Anzahl der Eingriffselemente an jeder Freilaufkomponente zwischen 16 und 80 und insbesondere zwischen 18 und 72. Damit wird ein sehr schnelles Ansprechen ermöglicht.

In besonders bevorzugten Ausgestaltungen liegt die Anzahl der Eingriffselemente an jeder Freilaufkomponente zwischen 24 und 42 und in einer konkreten Ausgestaltung bei 30 (+/-4). Dadurch werden eine sehr hohe Belastbarkeit zum Beispiel auch bei Fahrrädern mit Elektrounterstützung und eine immer noch sehr schnelles Ansprechverhalten gewährleistet.

Vorzugsweise ist die rotorseitige Freilaufkomponente drehfest und axial beweglich an dem Rotor aufgenommen und die nabenseitige Freilaufkomponente ist drehfest und insbesondere auch axial fest mit dem Nabengehäuse gekoppelt. Insbesondere ist die rotorseitige Freilaufkomponente als Zahnscheibe ausgebildet oder umfasst eine solche und ist stirnseitig mit einer Axialverzahnung versehen.

In bevorzugten Weiterbildungen und Ausgestaltungen ist der axiale Körperabschnitt der nabenseitigen Freilaufkomponente bzw. wenigstens ein Teil des axialen Körperabschnitts rohrförmig ausgestaltet und kann als rohrförmiger Körperabschnitt bezeichnet werden. In bevorzugten Ausgestaltungen weist der axiale oder rohrförmige Körperabschnitt einen runden Außenquerschnitt auf. Insbesondere ist dann an dem runden Außenquerschnitt (wenigstens) ein Außengewinde vorgesehen, mit welchem der axiale (rohrförmige) Körperabschnitt im montierten Zustand vorzugsweise in (wenigstens) ein Innengewinde des Nabengehäuses eingeschraubt ist. Dann ist der axiale (rohrförmige) Körperabschnitt axial fest und drehfest mit dem Nabengehäuse verbunden. Der rohrförmige Körperabschnitt ist vorzugsweise im Wesentlichen zylindrisch ausgebildet.

Wenn der axiale Körperabschnitt einen nach außen ragenden Fortsatz und einen nach innen ragenden Ringflansch aufweist, kann der Querschnitt (wenigstens im Wesentlichen) T-förmig ausgebildet sein. Dann können sich der Ringflansch und der Fortsatz axial überlappen oder wenigstens etwa in der gleichen axialen Position befinden. Möglich ist auch ein S- oder Z-förmiger Querschnitt. Vorzugsweise sind bei einem T-förmigen Querschnitt der Querstrich des "T" und somit der Ringflansch und der Fortsatz axial außen angeordnet, während der axiale oder rohrförmige Körperabschnitt sich weiter nach innen in das Nabengehäuse bzw. in die Nabe hinein erstrecken. Eine solche Ausgestaltung und ein solcher z. B. T-förmiger Querschnitt erlaubt eine kompakte Bauweise und eine hohe Belastbarkeit. Die (in Bezug auf die Nabe) axiale Außenseite des Ringflansches ist dann mit den Eingriffselementen ausgerüstet. Die (in Bezug auf die Nabe) axiale Innenseite des Fortsatzes stellt einen Anschlag zur Verfügung, der (im montierten Zustand) an dem radialen Absatz in dem Nabengehäuse anliegt. Dadurch wird ein großes Materialvolumen in dem Nabengehäuse zur Verfügung gestellt, über welches die auf das Nabengehäuse wirkenden Kräfte zuverlässig übertragen werden, wodurch bei leichtem Gewicht eine stabile Nabe zur Verfügung gestellt werden kann. Auf der axialen Außenseite des Fortsatzes können strukturiert Erhöhungen oder Vertiefungen angeordnet sein, um die nabenseitige Eingriffskomponente mit einem Werkzeug greifen zu können, um die Eingriffskomponente z. B. einzuschrauben und insbesondere wieder zu lösen.

Der Lagersitz ist vorzugsweise an dem axialen und/oder rohrförmigen Körperabschnitt und dort insbesondere radial innen ausgebildet.

Die nabenseitige Freilaufkomponente weist in einer besonders bevorzugten Ausgestaltung in einem Radialschnitt einen vorzugsweise im Wesentlichen L-förmigen Querschnitt auf, wobei ein Schenkel des "L" den axialen oder rohrförmigen Körperabschnitt bildet und sich der andere Schenkel des L in radialer Richtung (radial nach innen hin) erstreckt und mit den Eingriffselementen ausgerüstet ist. Ein solcher L-Querschnitt liegt insbesondere vor, wenn sich radial nach außen kein Fortsatz erstreckt. Das ermöglicht einen sehr kompakten Aufbau.

Vorzugsweise ist das Wälzlager in der nabenseitigen Freilaufkomponente mit mehr als 2/3 seiner axialen Breite aufgenommen. Insbesondere ist ein wesentlicher bzw. der wesentlichste Teil des Wälzlagers an dem Lagersitz der nabenseitigen Freilaufkomponente definiert aufgenommen. Vorzugsweise ist das Wälzlager mit mehr als 50 % und besonders bevorzugt mit mehr als 75 % seiner axialen Breite innerhalb der nabenseitigen Freilaufkomponente aufgenommen.

In anderen Ausgestaltungen ist das Wälzlager mit zwischen etwa 80 % und 90 % oder zwischen 80 % und 99,5 % und insbesondere 90 % und 99,5 % seiner axialen Breite an der nabenseitigen Freilaufkomponente aufgenommen. Vorzugsweise liegt bei diesen Ausgestaltungen ein (in axialer Richtung gesehen) lichter Abstand zwischen der axial inneren Stirnseite des axialen Körperabschnitts und dem Nabengehäuse vor. Der lichte Abstand bildet ein Spiel zwischen der axial inneren Stirnseite des axialen Körperabschnitts und dem Nabengehäuse.

Besonders bevorzugt ist das Wälzlager vollständig an dem Lagersitz der nabenseitigen Freilaufkomponente aufgenommen. Besonders bevorzugt ist der Lagersitz in der nabenseitigen Freilaufkomponente breiter ausgebildet als der Außenring des Wälzlagers. Dadurch wird es möglich, dass der Außenring des (rotorseitigen) Wälzlagers mit dem inneren axialen Ende an dem Nabengehäuse anliegt und mit dem axial äußeren Ende einen lichten Abstand (Spiel) zu der axialen Innenseite des Ringflansches der nabenseitigen Freilaufkomponente aufweist.

Vorzugsweise ist in dem Nabengehäuse ein radialer Lagerabsatz zur definierten axialen Ausrichtung des in der nabenseitigen Freilaufkomponente aufgenommenen Wälzlagers ausgebildet. Insbesondere wird das Wälzlager bzw. der Außenring des Wälzlagers zwischen dem radialen Lagerabsatz in dem Nabengehäuse und dem Ringflansch axial definiert positioniert. Vorzugsweise ist auf einer axialen Seite ein definiertes Spiel vorgesehen und auf der anderen axialen Seite ist das Wälzlager spielfrei angeordnet. Eine nachteilige Überbestimmung wird dadurch verhindert. Zwischen dem in der nabenseitigen Freilaufkomponente aufgenommenen Wälzlager (genau dessen Außenring) und der axialen Innenseite des Ringflansches ist vorzugsweise ein freier Abstand ausgebildet. Der freie Abstand stellt ein axiales Spiel zur Verfügung. Insbesondere ist der freie Abstand größer als 0,02 mm oder 0,05 mm. Vorzugsweise ist der freie Abstand größer als 0,1 mm oder größer 0,2 mm und kann 0,5 mm oder 1 mm erreichen und übersteigen. Der freie Abstand liegt insbesondere zwischen der axialen Innenseite des Ringflansches und dem Außenring des freilaufseitigen Wälzlagers für das Nabengehäuse vor. In einer bevorzugten Ausgestaltung beträgt der freie Abstand zwischen 0,02 mm und 0,35 mm.

In vorteilhaften Ausgestaltungen ist die Vorbelastungseinrichtung in der rotorseitigen Freilaufkomponente aufgenommen. Die Vorbelastungseinrichtung kann eine Feder oder mehrere Federn umfassen, beispielsweise eine (oder mehrere) Spiralfeder(n) und/oder wenigstens eine über magnetische Kräfte wirksame Feder. Insbesondere wird die Vorbelastungseinrichtung im Wesentlichen vollständig und besonders bevorzugt vollständig innerhalb der rotorseitigen Freilaufkomponente aufgenommen. Das bietet erhebliche axiale Bauraumvorteile, da die rotorseitige Freilaufkomponente in axialer Richtung nicht oder nur sehr wenig aufbaut, sodass axialer Bauraum eingespart werden kann. Dadurch kann die Steifigkeit der Nabe nochmals erhöht werden. Die Vorbelastungseinrichtung kann auch auf magnetischer Basis arbeiten und nach dem Prinzip magnetischer Anziehungs- oder Abstoßungskräfte arbeiten. Dann kann ein Teil der Vorbelastungseinrichtung auch außerhalb des Rotors angeordnet sein.

Insbesondere umfasst die rotorseitige Freilaufkomponente einen insbesondere zylindrischen Führungsabschnitt mit einer unrunden Außenkontur, welcher mit einer passenden oder angepassten unrunden Innenkontur in dem Rotor kämmt, um eine axiale Bewegbarkeit der rotorseitigen Freilaufkomponente relativ zu dem Rotor zu ermöglichen, und um die drehfeste Kopplung zwischen dem Rotor und der rotorseitigen Freilaufkomponente bereitzustellen.

In bevorzugten Ausgestaltungen ist das stirnseitige Ende der rotorseitigen Freilaufkomponente als rotorseitiger Ringflansch mit den daran (stirnseitig) angeordneten Eingriffselementen ausgebildet.

Vorzugsweise weist die rotorseitige Freilaufkomponente mit dem Führungsabschnitt und dem am stirnseitigen Ende angeordneten rotorseitigen Ringflansch einen in radialer Richtung etwa L-förmigen Querschnitt auf. Ein axial ausgerichteter Schenkel wird durch den Führungsabschnitt gebildet. Ein radial ausgerichteter Schenkel wird durch die Stirnseite des rotorseitigen Ringflanschs gebildet.

Vorzugsweise drückt die Vorbelastungseinrichtung die Stirnseite des rotorseitigen Ringflanschs mit den Eingriffselementen in Richtung der nabenseitigen Freilaufkomponente. Dabei liegt die Vorbelastungseinrichtung vorzugsweise innen an der dem rotorseitigen Ringflansch an.

Der rotorseitige Ringflansch und der (zylindrische) Führungsabschnitt bilden vorzugsweise im Wesentlichen die rotorseitige Freilaufkomponente. Der Führungsabschnitt und der rotorseitige Ringflansch sind besonders bevorzugt einstückig gefertigt.

Besonders bevorzugt stützt sich die Vorbelastungseinrichtung axial nach außen (unmittelbar) an einem Rotorlager zur drehbaren Lagerung des Rotors ab. Dabei stützt sich die Vorbelastungseinrichtung besonders bevorzugt direkt und unmittelbar an einem äußeren Lagerring des Rotorlagers ab.

In allen Ausgestaltungen sind die Lager zur Lagerung des Nabengehäuses und die Rotorlager zur Lagerung des Rotors vorzugsweise als Wälzlager und insbesondere als handelsübliches und/oder normiertes Rillenkugellager ausgeführt, die einen äußeren Lagerring (auch Außenring genannt), einen inneren Lagerring (auch Innenring genannt) und dazwischen insbesondere in einem Wälzkörperkäfig angeordnete Wälzkörper aufweisen. Wenigstens eines der Wälzlager und/oder der Rotorlager verfügt vorzugsweise über Lagerdichtungen, die direkt an dem Wälzlager angebracht sind und den Eintritt von Wasser und/oder Staub zum Inneren des Wälzlagers verhindern.

Die Vorbelastungseinrichtung kann sich auch mittelbar an einem Rotorlager abstützen, wenn beispielsweise eine Scheibe zwischen dem Rotorlager und der Vorbelastungseinrichtung angeordnet wird. Einen besonders platzsparenden Aufbau ermöglicht die unmittelbare Abstützung der Vorbelastungseinrichtung an dem Rotorlager, jedenfalls, wenn die Vorbelastungseinrichtung als zylindrische Spiralfeder ausgebildet ist. In anderen Ausgestaltungen ist es auch möglich, mehrere einzelne Federn einzusetzen, die sich dann jeweils außen an dem Rotorlager oder an anderen Komponenten abstützen.

Vorzugsweise ist zwischen dem Rotor und dem Nabengehäuse eine Dichteinrichtung vorgesehen. Die Dichteinrichtung weist insbesondere einen berührungsfreien Labyrinthspalt auf, der wenigstens einmal umgelenkt wird. Des Weiteren umfasst die Dichteinrichtung vorzugsweise wenigstens eine berührende Dichtlippe, die insbesondere dem Labyrinthspalt nachgeordnet ist. Die Dichteinrichtung verhindert insbesondere den Zutritt von Wasser und Staub zu der Freilaufeinrichtung möglichst weitgehend und insbesondere weitestgehend. Die Dichtlippe ist dabei vorzugsweise radial weiter innen als der Labyrinthspalt vorgesehen.

In allen Ausgestaltungen ist es besonders bevorzugt, dass der Rotor und vorzugsweise die Nabe weitgehend oder vollständig werkzeugfrei demontierbar ist bzw. sind. Das Nabengehäuse ist vorzugsweise gesteckt, die Endanschläge sind insbesondere angesteckt (eingesteckt oder vorzugsweise aufgesteckt) und die Nabe ist - gegebenenfalls abgesehen von der nabenseitigen Freilaufkomponente - vorzugsweise vollständig werkzeugfrei demontierbar. Auch die nabenseitige Freilaufkomponente kann werkzeugfrei demontierbar sein. Das erleichtert die Montage und die Demontage und damit auch eine Wartung oder Reparatur.

Vorzugsweise wird im montierten Zustand eine Einspannkraft der Nabe über die Innenringe der Wälzlager des Nabengehäuses und die Innenringe der Rotorlager abgestützt. Insbesondere ist zwischen dem freilaufseitigen Wälzlager des Nabengehäuses und dem freilaufseitigen Rotorlager und zwischen den beiden Rotorlagern jeweils wenigstens ein Hülsenkörper zur formschlüssigen Kraftübertragung der Einspannkraft angeordnet. Dadurch wird eine formschlüssige und besonders stabile Nabe bereitgestellt. Die Wälzkörper der Lager müssen dabei die axiale Einspannkraft der Nabe im Rahmen oder der Gabel nicht übertragen.

In bevorzugten Weiterbildungen umfasst die Nabe ein Spannsystem zur Befestigung der Nabe an einer Gabel oder einem Rahmen. Dabei umfasst das Spannsystem eine Spannachse und einen Spannhebel. Die Spannachse wird durch die hohle Nabenachse durchgeführt, um die Nabe oder ein damit ausgerüstetes Laufrad an einer Gabel oder einem Rahmen zu befestigen. Ein Außendurchmesser der Spannachse ist vorzugsweise auf den Innendurchmesser der Nabenachse abgestimmt. Insbesondere unterscheiden sich der Außendurchmesser der Spannachse und der Innendurchmesser der Nabenachse um weniger als 5% und vorzugsweise um weniger als 1%.

In allen Ausgestaltungen ist es bevorzugt, dass die Nabe für den Einsatz einer Steckachse ausgebildet ist. Vorzugsweise umfasst die Nabe eine Steckachse.

Es ist bevorzugt, dass Endanschläge vorgesehen sind, die auf die Achse bzw. Nabenachse aufgeschoben oder in die Nabenachse eingeschoben werden. Es ist möglich, austauschbare Endanschläge zur Verfügung zu stellen, wobei ein Satz von Endanschlägen zur Aufnahme einer Steckachse ausgebildet ist und wobei ein anderer Satz von Endanschlägen zur Aufnahme beispielsweise eines Schnellspanners vorgesehen ist. Der letztere Satz von Endanschlägen weist axial nach außen hin zylindrische Ansätze auf, die zur Aufnahme in den Ausfallenden eines Rahmens ausgebildet sind und die vorzugsweise einen kleineren Außendurchmesser aufweisen als ein Innendurchmesser der Nabenachse in einem zentralen Bereich der Nabenachse. Werden zwei Sätze von Endanschlägen mit der Nabe ausgeliefert, kann sich der Benutzer entscheiden, ob er sie mit der Steckachse oder mit einem Schnellspanner verwenden will. Auch eine nachträgliche Umrüstung ist möglich.

In allen Ausgestaltungen können auch mehr als zwei Wälzlager zur Lagerung des Nabengehäuses vorgesehen sein. Jedenfalls wird dann jeweils (wenigstens) ein Wälzlager an den beiden Endbereichen angeordnet. Ebenso können auch mehr als zwei Rotorlager eingesetzt werden.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine schematische Darstellung eines Mountainbikes;
- Figur 2: eine schematische Darstellung eines Rennrades;
- Figur 3: einen Schnitt durch eine erfindungsgemäße Nabe;
- Figur 4: ein vergrößertes Detail des Schnittes aus Figur 3;
- Figur 5: eine Explosionsdarstellung der Nabe nach Figur 3;
- Figur 6: einen Schnitt durch die Nabenachse nach Figur 5;
- Figur 7: eine perspektivische Ansicht der Nabenachse nach Figur 5;
- Figur 8: eine perspektivische Darstellung der nabenseitigen Freilaufkomponente der Nabe nach Figur 5;
- Figur 9: eine Seitenansicht der nabenseitigen Freilaufkomponente nach Figur 8;
- Figur 10: eine Vorderansicht der nabenseitigen Freilaufkomponente nach Figur 8;
- Figur 11: eine perspektivische Ansicht eines Werkzeugs; und
- Figur 12: eine Prinzipskizze eines Details aus Figur 4.

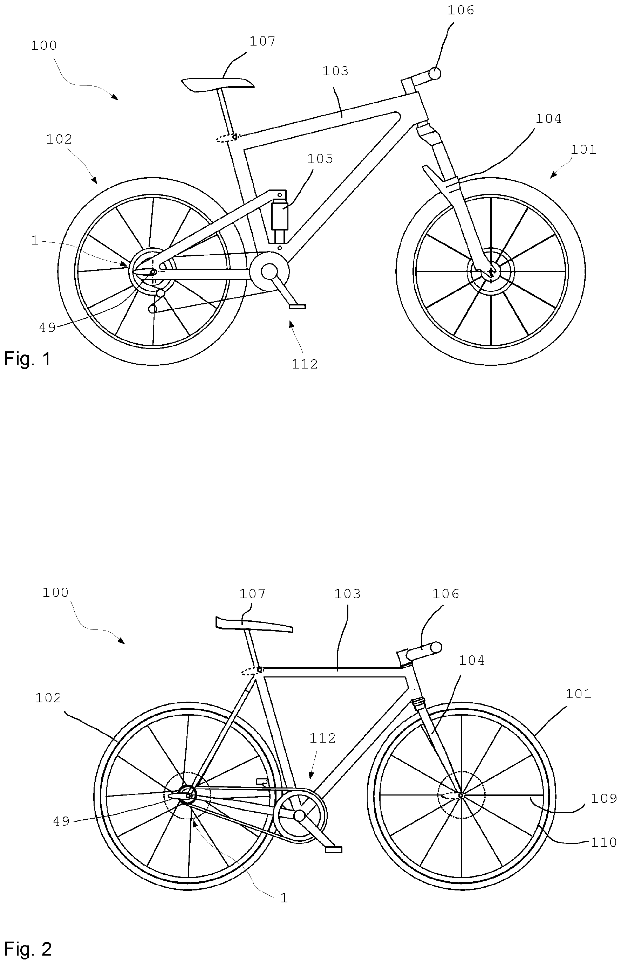

In den Figuren 1 und 2 sind jeweils ein Mountainbike bzw. ein Rennrad 100 dargestellt, die jeweils mit einer erfindungsgemäßen Nabe 1 ausgerüstet sind. Das Mountainbike bzw. Rennrad 100 verfügt jeweils über ein Vorderrad 101 und ein Hinterrad 102. An dem Hinterrad 102 wird die erfindungsgemäße Nabe 1 eingesetzt. Die beiden Räder 101, 102 verfügen über Speichen 109 und eine Felge 110. Es können konventionelle Felgenbremsen oder auch andere Bremsen wie zum Beispiel Scheibenbremsen vorgesehen sein.

Ein Rad 100 verfügt über einen Rahmen 103, einen Lenker 106, einen Sattel 107, eine Gabel bzw. Federgabel 104 und im Falle des Mountainbikes kann ein Hinterraddämpfer 105 vorgesehen sein. Zum Antrieb dient eine Tretkurbel 112 mit Pedalen. Gegebenenfalls kann ein elektrischer Hilfsantrieb an der Tretkurbel 112 und/oder den Rädern vorgesehen sein. Die Nabe 1 der Räder kann jeweils über ein Spannsystem 49 (z. B. Steckachse oder Schnellspanner) an dem Rahmen befestigt sein.

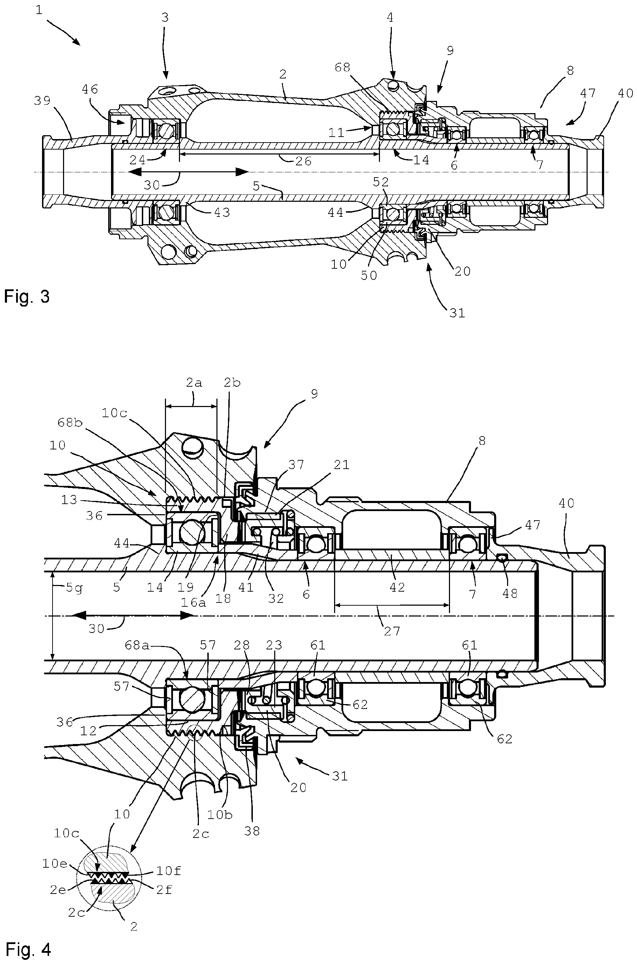

Die in den Fahrrädern gemäß Figur 1 und 2 jeweils am Hinterrad 102 eingesetzten Naben 1 zeigt Figur 3 in einem Schnitt.

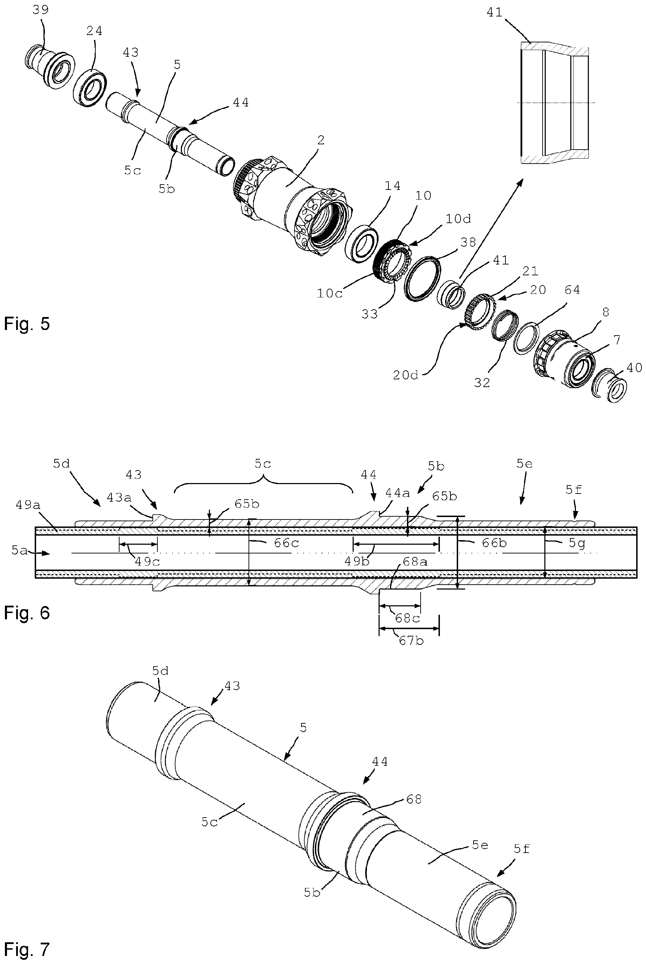

Die erfindungsgemäße Nabe 1 umfasst ein Nabengehäuse 2, welches in den axialen Endbereichen 3 und 4 jeweils über Wälzlager 24 bzw. 14 drehbar gegenüber und hier unmittelbar drehbar auf einer Nabenachse 5 gelagert ist. Das bedeutet, dass die Wälzlager 14, 24 jeweils direkt auf der Nabenachse 5 angeordnet sind. Die Nabenachse 5 weist eine innere Durchgangsöffnung 5a mit einer zylindrischen Innenoberfläche auf. Der lichte Durchmesser ist so bemessen, dass eine angepasste Spannachse 49a (vgl. Fig. 6) eines Spannsystems 49 durchgeführt werden kann. Vorzugsweise ist ein nur geringer radialer Abstand zwischen der Außenoberfläche der Spannachse und der Innenwandung der Durchgangsöffnung 5a ausgebildet.

Die Nabe umfasst des Weiteren einen Rotor 8, an dem wenigstens ein Ritzel anzuordnen ist. Insbesondere kann dort ein Ritzelpaket aufgeschoben und befestigt bzw. angeordnet werden. Zwischen dem Rotor 8 und dem Nabengehäuse 2 ist eine Freilaufeinrichtung 9 vorgesehen, die die nabenseitige Freilaufkomponente 10 und die rotorseitige Freilaufkomponente 20 umfasst. Um den Eintritt von Wasser und Staub in das Innere der Nabe 1 und insbesondere um den Zutritt von Wasser und Staub zu der Freilaufeinrichtung 9 zu vermeiden, ist zwischen dem Rotor 8 und dem Nabengehäuse 2 eine Dichteinrichtung 38 ausgebildet, die hier einen labyrinthartigen Dichtspalt und eine nachgeschaltete Lippendichtung umfasst, die berührend an dem Rotor anliegt und den Freilauf zuverlässig vor dem Eintritt von Schmutz und Wasser schützt.

An den beiden Enden sind Endanschläge 39 bzw. 40 auf die Nabenachse aufgeschoben, die - wenn das damit ausgerüstete Laufrad nicht im Rahmen eingespannt ist - über O-Ringe 48 auf der Nabenachse gesichert werden. An den Endanschlägen 39 und 40 ist jeweils ein Dichtflansch 46 bzw. 47 vorgesehen, die die Enden der Nabe 1 vor dem Eintritt von Schmutz und Wasser schützen. Hier ist an dem rotorseitigen Endanschlag 40 ein radialer Dichtflansch 47 vorgesehen, während am anderen Endanschlag 39 ein Doppelflansch 46 ausgebildet ist, der aus zwei radialen Dichtflanschen besteht, zwischen denen ein axialer Abstand und Freiraum ausgebildet ist.

Die als Wälzlager ausgebildeten Nabenlager 14, 24 zur drehbaren Lagerung des Nabengehäuses 2 stützen sich an radialen Absätzen in Verdickungen 43, 44 der Nabenachse 5 ab. Die Verdickungen 43 und 44 befinden sich jeweils axial nach innen von den Lagern 14, 24.

Das rotorseitige Nabenlager 14 ist in einem axialen Längsabschnitt 5b an einem Lagersitz 68 gelagert. Dabei wird der Innenring52 an einem inneren Lagersitz 68a auf der Außenoberfläche des Längsabschnitt 5b aufgenommen und der Außenring 50 wird an dem Lagersitz 68b im Inneren der nabenseitigen Freilaufkomponente 10 aufgenommen. Im Bereich des axialen Längsabschnitts 5b ist ein Außendurchmesser der hohlen Nabenachse 5 größer als in einem zentralen Bereich 5c zentral zwischen den Verdickungen 43, 44. Durch die geringfügige Erhöhung der Wandstärke (vgl. auch Figur 6) wird ein deutlich gleichmäßigerer Lastverlauf an der Nabe erreicht.

In allen Ausgestaltungen der Nabe 1 ist an den Verdickungen 43, 44 die radiale Wandstärke der Nabenachse 5 vorzugsweise etwas größer. Insbesondere beträgt die radiale Wandstärke dort zwischen etwa dem 1,5fachen und dem 3fachen der radialen Wandstärke in den anderen Bereichen. Abgesehen von den Verdickungen 43, 44 und dem axialen Längsabschnitt 5b ist die Nabenachse 5 im Wesentlichen hohlzylindrisch ausgebildet und weist Unterschiede in der Wandstärke vorzugsweise kleiner 25% und insbesondere kleiner 15% oder kleiner 10% oder kleiner 5% oder kleiner 2% auf. Vorzugsweise ist ein Verhältnis von maximalem Außendurchmesser der Nabenachse (inkl. Verdickung) zu minimalem Innendurchmesser der Nabenachse kleiner als 2,0 und insbesondere kleiner als 1,75. Vorzugsweise ist das Verhältnis von maximalem Außendurchmesser der Nabenachse zu minimalem Innendurchmesser der Nabenachse größer als 1,25 und insbesondere größer als 1,5.

Der Rotor 8 wird über zwei Rotorlager 6 und 7 drehbar (und unmittelbar) auf der Achse 5 abgestützt.

Das Wälzlager 14 ist innerhalb der nabenseitigen Freilaufkomponente 10 aufgenommen und befindet sich dort in einem zentrischen Aufnahmeraum 11 definiert an einem Lagersitz 68. Dadurch kann erheblicher axialer Bauraum eingespart werden, wodurch die Stabilität und Steifigkeit der Nabe vergrößert werden kann. Außerdem wird das Gesamtgewicht der Nabe 1 erheblich reduziert. Sowohl das Gewicht der einzelnen Freilaufkomponenten als auch das Gewicht des Nabengehäuses können reduziert werden, da die Wandstärke in dem rotorseitigen Endbereich 4 des Nabengehäuses 2 reduziert werden kann.

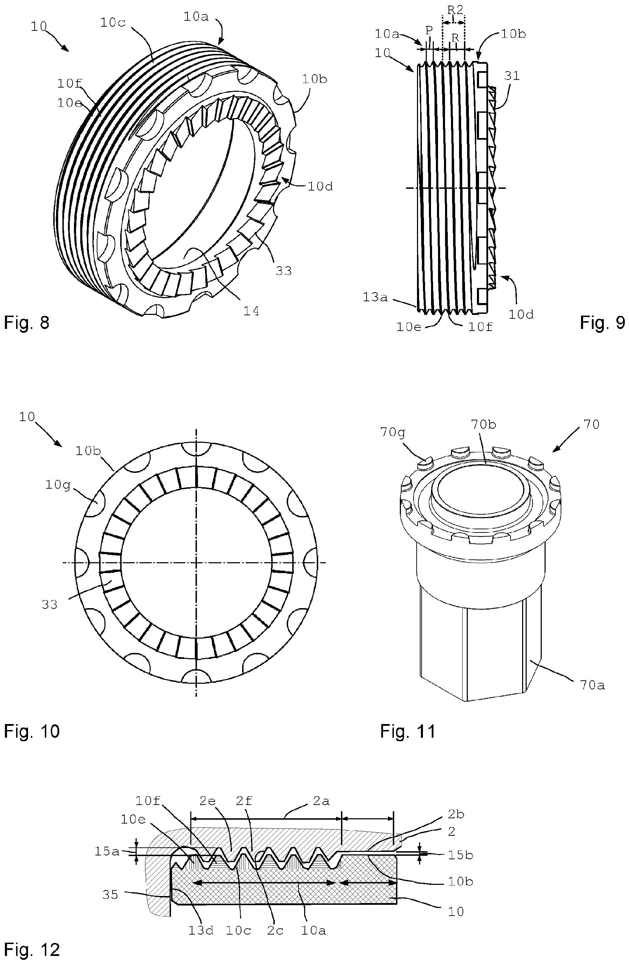

Figur 4 zeigt ein vergrößertes Detail aus Figur 3, wobei auch hier die Freilaufeinrichtung 9 in der Eingriffsstellung 31 dargestellt ist, in der die insbesondere als Axialverzahnungen 10d, 20d (vgl. Fig. 5, 8) ausgebildeten Eingriffselemente 33 der Freilaufkomponente 10 und der Freilaufkomponente 20 im drehfesten Eingriff miteinander stehen. Die Eingriffselemente 33 sind dabei derart ausgestaltet, dass bei einer Drehrichtung in Antriebsrichtung zuverlässig ein Drehmoment auf das Nabengehäuse 2 übertragen wird, während bei einer entgegengesetzten Drehrichtung die Freilaufkomponente 20 axial gegen die Vorbelastungskraft der Vorbelastungseinrichtung 32 nach außen gedrückt wird, bis die Eingriffselemente 33 außer Eingriff geraten, sodass eine Relativdrehung von Rotor zu Nabengehäuse möglich ist. Die rotorseitige Freilaufkomponente 20 verfügt über einen Führungsabschnitt 23 mit einer unrunden Außenkontur 21. Die unrunde Außenkontur 21 kämmt mit einer angepassten unrunden Innenkontur 37 in dem Rotor 8 und ist parallel zur axialen Richtung 30 in dem Rotor 8 axial verschiebbar.

Die Freilaufkomponente 10 weist hier im radialen Querschnitt eine etwa L-förmige Ausgestaltung auf, bei der ein axialer Körperabschnitt 13 in einem Befestigungsbereich 10a mit einem mehrgängigen Außengewinde 10c versehen ist, der in ein Innengewinde 2c an dem Befestigungsabschnitt 2a in dem Nabengehäuse eingeschraubt ist, sodass die Freilaufkomponente 10 axial fest und (in Antriebsrichtung) drehfest mit dem Nabengehäuse 2 verbunden ist.

Zur definierten radialen Positionierung der nabenseitigen Freilaufkomponente 10 und des darin aufgenommenen Wälzlagers 14 dient der Zentrierabschnitt 2b, in welchem der Zentrierbereich 10b der nabenseitigen Freilaufkomponente 10 passgenau aufgenommen ist. Insbesondere ist die Passung nahezu spielfrei. Es kann sich auch um eine Presspassung handeln, sodass die nabenseitige Freilaufkomponente 10 in das Nabengehäuse 2 (während des Einschraubens) eingepresst wird. Hier ist der Zentrierbereich 10b an dem axial äußeren Ende der Freilaufkomponente 10 ausgebildet.

Radial innerhalb des axialen Körperabschnitts ist ein zylindrischer Lagersitz 68b ausgebildet, an dem das rotorseitige Wälzlager 14 zur drehbaren Lagerung des Nabengehäuses 2 aufgenommen ist. Das Wälzlager 14 wird im montierten Zustand in axialer Richtung mit seinem Innenring formschlüssig zwischen der Verdickung 44 und dem Hülsenkörper 41 an dem axialen Längsabschnitt 5b aufgenommen.

Der Kraftschluss in axialer Richtung 30 erfolgt von dem Endanschlag 40 über den Innenring 61 des Rotorlagers 7, den Hülsenkörper 42, den Innenring des Rotorlagers 6, den Hülsenkörper 41, den Innenring des Wälzlagers 14 und wird dann über die radiale Verdickung 44 in die Nabenachse 5 eingeleitet und von dort über die radiale Verdickung 43 auf den Innenring des Wälzlagers 24 übertragen, von wo die Einspannkraft über den Endanschlag 39 schließlich wieder abgeleitet wird.

Im montierten Zustand liegt die nabenseitigen Freilaufkomponente 10 an einem radialen Absatz 36 innerhalb des Nabengehäuses 2 an. Die Position der nabenseitigen Freilaufkomponente 10 wird durch den radialen Absatz 36 in dem Nabengehäuse definiert.

Das rotorseitige Nabenlager bzw. Wälzlager 14 zur Lagerung des Nabengehäuses ist an dem Lagersitz 68 in dem zentrischen Aufnahmeraum 11 aufgenommen und wird in axialer Richtung durch die Innenfläche 19 des Ringflansches 18 der nabenseitigen Freilaufkomponente 10 und den radialen Lagerabsatz 36 in dem Nabengehäuse 2 definiert positioniert. Dabei ist vorzugsweise zwischen der Innenfläche 19 des Ringflansches 18 und dem Außenring 50 des Wälzlagers 14 ein geringes axiales Spiel, während das Wälzlager 14 spielfrei an dem radialen Lagerabsatz 36 in dem Nabengehäuse 2 anliegt.

Das Wälzlager 14 verfügt vorzugsweise über eine Dichteinheit 57 zur Abdichtung des Wälzlagers. Ebenso verfügt auch das andere Wälzlager 24 und die Rotorlager 6 und 7 verfügen vorzugsweise jeweils über derartige Dichteinheiten 57 zur jeweils beidseitigen Abdichtung.

Die nabenseitige Freilaufkomponente 10 verfügt über ein mehrgängiges Außengewinde 10c mit hier zwei Gewindegängen 10e und 10f, wie aus dem vergrößerten Detail in Fig. 4 unten links oder auch Fig. 12 hervorgeht. Entsprechend ist in dem Nabengehäuse ein angepasstes mehrgängiges Innengewinde 2c mit hier zwei Gewindegängen 2e und 2f ausgebildet. Die mehrgängige Gewindeverbindung zwischen dem Nabengehäuse und der nabenseitigen Freilaufkomponente 10 übt weniger Axialkräfte auf das Nabengehäuse aus, als eine eingängige Schraubverbindung mit gleicher Teilung. Das liegt daran, dass der Steigungswinkel des Gewindegangs erheblich größer ist und dadurch kleinere Axialkräfte resultieren. Auch die Demontierbarkeit wird erleichtert, da die Selbsthemmung geringer ist. Durch die geringeren Axialkräfte bedingt, wird das Nabengehäuse weniger belastet. Die Wandstärken können bei gesteigerter Haltbarkeit verringert werden.

Die rotorseitige Freilaufkomponente 20 weist an der Stirnseite einen rotorseitigen Ringflansch 28 mit den dort ausgebildeten Eingriffselementen 33 auf. Der rotorseitige Ringflansch 28 ist insbesondere einstückig mit einem zylindrischen Führungsabschnitt 23 der rotorseitigen Freilaufkomponente 20 ausgebildet. Im Inneren der Freilaufkomponente 20 drückt gegen die stirnseitige Innenfläche vorzugsweise die insbesondere als Spiralfeder ausgebildete Vorbelastungseinrichtung 32, sodass die Freilaufkomponente 20 in die Eingriffsstellung 31 vorbelastet wird. Die Spiralfeder 32 stützt sich am anderen Ende vorzugsweise an dem Außenring 62 des Rotorlagers 6 ab. Dadurch wird ein minimaler axialer Bauraum erzielt, wodurch die Steifigkeit der Nabe insgesamt noch deutlich erhöht werden kann.

Wie in Figur 3 eingezeichnet ist, wird ein großer axialer Abstand 26 zwischen den Wälzlagern 14 und 24 zur drehbaren Lagerung des Nabengehäuses erzielt. Dadurch kann die Steifigkeit und Stabilität der Nabe erheblich gesteigert werden. Durch diese erhebliche Steigerung des axialen Abstands 26, der mehrere Millimeter beträgt, kann auf eine zweiseitig schwimmende axiale Lagerung der Freilaufkomponenten 10 und 20 verzichtet werden und dennoch eine größere Steifigkeit der Nabe bereitgestellt werden. Die Abnutzung der insbesondere als Zahnscheiben ausgeführten Freilaufkomponenten 10, 20 erfolgt gleichmäßig und eine sichere Funktion wird erreicht. Außerdem kann das Gewicht der Nabe deutlich reduziert werden. Im Vergleich zum Stand der Technik nach der EP 1 121 255 B1 kann der axiale Abstand 26 zwischen den Innenringen der Wälzlager zur Lagerung des Nabengehäuses um mehr als 5 oder sogar 6 mm vergrößert werden. Der axiale Abstand 27 zwischen den Rotorlagern kann ebenfalls um mehr als 1 mm vergrößert werden, sodass die Belastbarkeit der Nabe 1 zunimmt und die Seitensteifigkeit erheblich vergrößert werden kann.

In Figuren 3 und 4 ist der lichte innere Durchmesser 5g der Nabenachse 5 zu erkennen, der sich über wenigstens den größten Teil der Länge und insbesondere die gesamte Länge der Nabenachse 5 nur geringfügig ändert. Besonders bevorzugt ist der lichte innere Durchmesser 5g (der auch als freier innerer Durchmesser bezeichnet werden kann) konstant und ändert sich über der Länge vorzugsweise um weniger als 5% oder um weniger als 1% oder praktisch gar nicht. Wenigstens über den Großteil der Länge. Insbesondere ragt von der Innenwandung nichts nach innen. Solche Ausgestaltungen ermöglichen eine optimale Abstützung der Nabenachse von innen durch eine Spannachse, die vollflächig oder in bestimmten Abschnitten oder Bereichen von innen dicht an der Nabenachse anliegt.

In Figuren 3 und 4 ist ein freier Abstand 16a zwischen der axialen Außenseite des rotorseitigen Nabenlagers 14 und der axialen Innenseite des Ringflansches 18 zu erkennen. Der freie Abstand 16a stellt ein axiales Spiel zur Verfügung. Das in der Freilaufkomponente 10 aufgenommene Wälzlager 14 liegt an dem axial inneren Ende mit dem äußeren Lagerring bzw. Außenring 50 an dem Lagerabsatz 36 in dem Nabengehäuse 2 an, um das Wälzlager 14 definiert auszurichten. An dem anderen axialen Ende besteht der freie Abstand 16a. Dadurch wird eine Überbestimmung vermieden.

Figur 5 zeigt eine Darstellung wesentlicher Teile der erfindungsgemäßen Nabe 1. Links dargestellt ist der Endanschlag 39, der nach dem Einbau bzw. dem Einschieben des Wälzlagers 24 in die Nabenhülse 2 auf die Nabenachse 5 aufgesteckt werden kann. Die Nabenachse 5 weist radiale Verdickungen 43 und 44 und den axialen Längsabschnitt 5b auf. Auf der Rotorseite des Nabengehäuses 2 wird das Wälzlager 14 an dem Lagersitz 68 der nabenseitigen Freilaufkomponente 10 aufgenommen und zusammen mit der Freilaufkomponente 10 in das Nabengehäuse 2 eingeschraubt. Durch den Zentrierabschnitt 2b und den Zentrierbereich 10b wird eine definierte radiale Positionierung gewährleistet. Danach wird die Dichteinrichtung 38 eingeführt und es wird der Hülsenkörper 41 aufgeschoben. Der Hülsenkörper 41 weist zwei axiale und etwa zylindrisch ausgebildete Endabschnitte und einen konischen Abschnitt dazwischen auf. Der konische Abschnitt verbindet die unterschiedliche Durchmesserbereiche.

In den Rotor 8 werden die Rotorlager 6 und 7 und dazwischen der Hülsenkörper 42 eingebracht. In den Rotor 8 werden die Vorbelastungseinrichtung 32 und die rotorseitige Freilaufkomponente 20 eingebracht und der Rotor 8 wird auf die Nabenachse 5 aufgeschoben. Schließlich wird der Endanschlag 40 aufgeschoben.

Figur 6 zeigt eine schematische geschnittene Darstellung der Nabenachse 5, in der die zylindrische innere Durchgangsöffnung 5a zu erkennen ist. Innerhalb der inneren Durchgangsöffnung 5a ist hier eine Spannachse 49a eines Spannsystems 49 stark schematisch eingezeichnet. Der zugehörige Spannhebel mit einem Spannstück und weitere Teile wie ein Gewinde als Endstück an dem anderen Ende der Spannachse 49a sind hier nicht dargestellt. Das Spannsystem kann als konventioneller Schnellspanner mit Exzenterhebel ausgeführt sein, kann aber auch nur die Spannachse mit Gewinden an beiden Enden umfassen, die entsprechend verschraubt werden oder kann eine Steckachse umfassen.

Die Wandstärke in dem axialen Längsabschnitt 5b der Nabenachse 5 ist erheblich größer als in dem zentralen Bereich 5c oder auch in den Endabschnitten 5d (erster Endabschnitt) oder 5e (zweiter oder rotorseitiger Endabschnitt). Nur in den Bereichen der radialen Verdickungen 43, 44, wo die Nabenlager 14, 24 an den Absätzen 43a, 44a anliegen, ist die Wandstärke mit hier etwa 4 mm noch etwas größer. Die Wandstärke 65b beträgt hier 2,5 mm und erstreckt sich über die Länge 68c des inneren Lagersitzes 68b von etwa 10 mm. Die Länge 67b des axialen Längsabschnitts 5b ist durch den etwa konischen Anstiegsbereich etwas größer. Eine vernünftige Sichtweise ist es, dass der Bereich der Verdickung 44 mit dem Absatz 44a einen Teil des axialen Längsabschnitts 5b bildet. Die Länge 67b vergrößert sich dann dementsprechend um zwischen 5 und 10 mm.

Der Außendurchmesser 66b im Bereich des Lagersitzes 68b beträgt hier 17 mm. Der durchgängige Innendurchmesser liegt bei etwa 12 mm und ist so bemessen, dass typische Stecklachsen von 12 mm Durchmesser montierbar sind. In den anderen Abschnitten 5d und 5e und im zentralen Bereich 5c beträgt hier die Wandstärke 65b etwa 1,5 mm. In der Nähe eines oder beider Enden der Nabenachse 5 kann diese eine umlaufende Nut 5f zur definierten axialen Positionierung z. B. eines O-Rings oder dergleichen aufweisen.

Gestrichelt eingezeichnet ist in Fig. 6 eine Kontur der Spannachse 4a, bei der die Spannachse insgesamt hier aus zylindrischen Abschnitten besteht. Wenigstens ein Längsbereich 49b ist vorgesehen, in welchem der Außenquerschnitt der Spannachse 49a an den Innenquerschnitt der Nabenachse 5 angepasst ist. In dem Längsbereich 49b, hier an dem rotorseitigem Nabenlager 14 liegt die Spannachse 49a nahezu von innen an der Nabenachse 5 an. Wenn im Betrieb sehr hohe Belastungen oder Überlasten auftreten, verhindert der verdickte Längsabschnitt 49b der Spannachse 49a eine Durchbiegung der Nabenachse 5 und stützt radial von innen die Nabenachse 5 ab. Es ist möglich, dass zwei oder mehr Längsbereiche umfasst sind. Hier sind beispielhaft zwei Längsbereiche 49b und 49c eingezeichnet. Der Längsbereich 49c kann die Nabenachse an dem anderen und gegenüberliegenden Nabenlager abstützen. Gegebenenfalls sind auch verdickte Längsbereiche an den Rotorlagern vorgesehen.

In Figur 6 ist der lichte innere Durchmesser 5g der Nabenachse 5 zu erkennen, der sich hier konstant über die gesamte Länge der Nabenachse 5 erstreckt. Das ermöglicht die vollständige oder bereichsweise dichte Anlage der Spannachse.

Figur 7 zeigt eine perspektivische Ansicht nur der Nabenachse, in der die Bereiche und Abschnitte 5d, 5c, 5b und 5e und der an dem axialen Längsabschnitt ausgebildete Lagersitz 68 erkennbar sind.

Figuren 8 und 9 zeigen die nabenseitige Freilaufkomponente 10 in einer perspektivischen Ansicht und in einer Seitenansicht. Dabei wird deutlich, dass die nabenseitige Freilaufkomponente einen sehr kompakten Aufbau erlaubt. Mit dem Befestigungsbereich 10a und dem dort ausgebildeten Außengewinde 10c wird die nabenseitige Freilaufkomponente 10 in das Nabengehäuse 2 eingeschraubt. Der Zentrierbereich 10b gewährleistet zusammen mit dem Zentrierabschnitt 2b im Nabengehäuse 2 einen definierten radialen Sitz der nabenseitigen Freilaufkomponente 10. Auch bei Austausch des Wälzlagers 14 oder der nabenseitigen Freilaufkomponente 10 wird ein reproduzierbarer Sitz erzielt.

Die Eingriffselemente 33 sind an der axialen Außenseite auf der Stirnseite des Ringflansches 18 ausgebildet, der sich insbesondere von dem axialen und hier rohrförmigen Körperabschnitt 13 aus radial nach innen hin erstreckt.

Es ist die etwa L-förmige Struktur zu erkennen, an der radial innen der Lagersitz 68 ausgebildet ist, an dem das Wälzlager 14 definiert aufgenommen ist.

Das mehrgängige Außengewinde 10c mit den zwei Gewindegängen 10e und 10f ermöglicht eine höhere Haltbarkeit. Es liegt im Vergleich zu einem eingängigen Gewinde die doppelte Steigung R bei gleicher Teilung P vor, wodurch die Selbsthemmung und die Axialkräfte reduziert werden.

Das Wälzlager 14 weist eine axiale Breite 16 auf und wird hier über seine vollständige axiale Breite an dem Lagersitz 68b über der Länge des Befestigungsbereichs 10a in dem axialen Körperabschnitt 13 gestützt. Eine axiale Überbestimmung wird durch einen geringen seitlichen Abstand des Außenrings 50 von der Innenfläche 19 des Ringflansches 18 vermieden.

Das Wälzlager 14 verfügt über einen Außenring 50 und einen Innenring 52 zwischen denen die Wälzkörper 53 an Führungsrillen angeordnet sind. Dichteinheiten 57 dichten das Wälzlager 14 in beide axialen Richtungen ab.

In Fig. 8 bis 10 ist an der nabenseitigen Freilaufkomponente 10 noch eine Werkzeugkontur 10g zu erkennen, die zum leichteren Öffnen mit einem angepassten Werkzeug 70 (vgl. Fig. 11) dient.

Die Werkzeugkontur 10g umfasst hier mehrere Vertiefungen (oder Erhebungen), die mit dem Werkzeug 70 koppelbar sind. Die Werkzeugkonturen 10g können unterschiedliche Formen aufweisen, beispielsweise die gezeigte Kontur. Möglich sind aber auch ein Innenpolygon, ein Außenpolygon oder geeignete Vertiefungen.

Hier sind die halbkreisförmigen Aussparungen 10g auf dem Umfang verteilt angeordnet. Die Zwischenräume auf dem Umfang zwischen den Aussparungen 10g bilden den Zentrierbereich 10b und stellen einen definierten Außendurchmesser bereit.

Das in Fig. 11 dargestellte Werkzeug 70 weist entsprechende Konturen 70g auf und kann drehfest mit der nabenseitigen Freilaufkomponente 10 gekoppelt werden. Die Zentrierung 70b erlaubt einen reproduzierbaren Sitz. Das Werkzeugende 70a kann mit einem weiteren Werkzeug gegriffen werden. Diese Ausgestaltung erlaubt einen besonders kompakten Aufbau der nabenseitigen Freilaufkomponente, die zudem einfach zu fertigen ist.

Der axiale Körperabschnitt 13 der nabenseitigen Freilaufkomponente 10 weist in dem dargestellten Ausführungsbeispiel einen etwa gleichbleibenden radialen Durchmesser auf. Zu dem axial inneren Ende des axialen Körperabschnitts 13 hin erstreckt sich der Befestigungsbereich 10a mit dem mehrgängigen Außengewinde 10c, während sich zum axial äußeren Ende hin der Zentrierbereich 10b erstreckt, der zusammen mit dem Zentrierabschnitt 2b eine genau definierte Passung und somit genau definierte radiale Positionierung und Ausrichtung der nabenseitigen Freilaufkomponente 10 gewährleistet. Die radialen Toleranzen bzw. das radiale Spiel ist im Zentrierbereich 10b erheblich geringer als im Befestigungsbereich 10a. Bei dieser Ausgestaltung kann die nabenseitige Freilaufkomponente 10 zunächst zylindrisch mit dem Durchmesser des Zentrierbereiches 10b ausgebildet werden und es ist möglich, dass anschließend nur über einen Teil der axialen Länge ein mehrgängiges Gewinde 10c eingeschnitten oder eingebracht wird, wodurch der Befestigungsbereich 10a entsteht. Es kann in dem Befestigungsbereich 10a auch der Außendurchmesser noch etwas reduziert werden, um ein leichteres Durchführen durch den Zentrierabschnitt 2b zu ermöglichen.

Bei dieser Nabe 1 wird ein zu starkes Einschrauben der Befestigungskomponente 10 in das Nabengehäuse 2 auch dadurch verhindert, dass die axial innere Stirnseite 13a des axialen Körperabschnitts 13 an dem radialen Absatz 36 in dem Nabengehäuse anliegt.

Figur 12 zeigt stark schematisch ein vergrößertes Detail aus Figur 4, wobei die Darstellung nicht maßstäblich ist, um das Prinzip besser zeigen zu können. Dort, wo sich der Zentrierabschnitt 2b und der Zentrierbereich 10b überlappen, liegt eine radiale Toleranz 15b bzw. ein radiales Spiel vor, während bei dem Befestigungsbereich 10a und dem Befestigungsabschnitt 2a eine erheblich größere Toleranz 15a vorhanden ist. Dadurch wird eine deutlich bessere und wiederholbarere radiale Positionierung der nabenseitigen Freilaufkomponente 10 und damit auch des Wälzlagers 14 erzielt, welches ja die eine Seite der Nabe 1 drehbar auf der Nabenachse 5 lagert. Schon kleine radiale Änderungen können an der Felge große axiale Auswirkungen produzieren. Die Zähne der einzelnen Gewindegänge 10e und 10f sind extra unterschiedlich schraffiert, um die verschiedenen Gewindegänge 2e und 2f besser darstellen zu können.

In allen Ausgestaltungen erlaubt die Nabe eine höhere Seitensteifigkeit, eine erhöhte Biegesteifigkeit und einen noch sicheren Betrieb und eine bessere Wartbarkeit. Gleichzeitig kann das Gewicht gesenkt werden, was insbesondere im sportlichen Bereich und im professionellen Bereich von großer Bedeutung ist.

Ein weiterer Vorteil ist, dass der Nabenkörper einen kleineren Querschnitt aufweist und deshalb strömungsgünstiger ist. Die Anzahl der Teile ist geringer, sodass Wartung, Montage und Demontage einfacher werden. Auch die Fertigung der Nabe wird einfacher.

Ein sehr erheblicher Vorteil wird durch die gezielte Anordnung des rotorseitigen Nabenlagers an einem kurz ausgebildeten axialen Abschnitt mit vergrößertem Außendurchmesser erzielt. Dadurch kann eine bessere Lastverteilung und eine höhere Stabilität erreicht werden.

In allen Ausgestaltungen ist es bevorzugt, dass an den Wälzlagern geschliffene Lagerinnenringe eingesetzt werden. Ebenso kann auch ein geschliffener Außenring eingesetzt werden, sodass sehr geringe Reibungswerte erzielt werden.

### Bezugszeichenliste:

| | | | |
|---|---|---|---|
| 1 | Nabe | 32 | Vorbelastungseinrichtung |
| 2 | Nabengehäuse | 33 | Eingriffselemente |
| 2a | Befestigungsabschnitt | 36 | Lagerabsatz in 2 |
| 2b | Zentrierabschnitt | 37 | Innenkontur in 8 |
| 2c | Innengewinde | 38 | Dichteinrichtung |
| 2e,2f | Gewindegang | 39,40 | Endanschlag |
| 3, 4 | Endbereich | 41,42 | Hülsenkörper |
| 5 | Nabenachse | 43,44 | radiale Verdickungen |
| 5a | Durchgangsöffnung | 43a | Absatz |
| 5b | axialer Längsabschnitt | 44a | Absatz |
| 5c | zentraler Bereich | 46 | Doppelflansch von 39 |
| 5d | erster Endabschnitt | 47 | Dichtflansch von 40 |
| 5e | Rotorabschnitt | 48 | O-Ring |
| 5f | Nut | 49 | Spannsystem |
| 5g | lichter Durchmesser | 49a | Spannachse |
| 6, 7 | Rotorlager | 49b | Längsbereich |
| 8 | Rotor | 49c | Längsbereich |
| 9 | Freilaufeinrichtung | 50,51 | Außenring |
| 10 | nabenseitige Freilaufkomponente | 52 | Innenring |
| | | 53 | Wälzkörper |
| 10a | Befestigungsbereich | 57 | Dichteinheit |
| 10b | Zentrierbereich | 58 | Dichtring |
| 10c | Außengewinde | 61 | Innenring von 6, 7 |
| 10d | Axialverzahnung | 62 | Außenring von 6, 7 |
| 10e | Gewinde | 65b | Wandstärke in 5b |
| 10f | Gewinde | 65c | Wandstärke in 5c |
| 10g | Kontur, Aussparung | 66b | Durchmesser in 5b |
| 11 | Aufnahmeraum | 66c | Durchmesser in 5c |
| 13 | axialer Körperabschnitt | 67b | Länge von 5b |
| 13a | axial innere Stirnseite | 68 | Lagersitz |
| 13d | Anschlag | 68c | Länge von 68 |
| 14 | Wälzlager | 70 | Werkzeug |
| 15a | Toleranz, Spiel | 70a | Koppelkontur |
| 15b | Toleranz, Spiel | 70b | Zentrierung |
| 16 | axiale Breite | 70g | Kontur, Innenkontur |
| 16a | Abstand | 100 | Fahrrad |
| 18 | Ringflansch | 101 | Rad, Vorderrad |
| 19 | Innenfläche von 18 | 102 | Rad, Hinterrad |
| 20 | rotorseitige | 103 | Rahmen |
| | Freilaufkomponente | 104 | Gabel, Federgabel |
| 20d | Axialverzahnung | 105 | Hinterraddämpfer |
| 21 | Außenkontur | 106 | Lenker |
| 23 | zylindrischer Führungsabschnitt | 107 | Sattel |
| | | 109 | Speiche |
| 24 | Wälzlager | 110 | Felge |
| 26,27 | Lagerabstand | 112 | Tretkurbel |
| 28 | rotorseit. Ringflansch | P | Teilung |
| 30 | axiale Richtung | R | Steigung |
| 31 | Eingriffsstellung | | |

## Patentansprüche

1. Nabe (1) für wenigstens teilweise muskelbetriebene Fahrzeuge und insbesondere Fahrräder (100) umfassend eine hohle Nabenachse (5) mit einer im Wesentlichen zylindrischen inneren Durchgangsöffnung (5a) zur Durchführung einer Spannachse, ein mit wenigstens zwei Nabenlagern (14, 24) gegenüber der Nabenachse (5) drehbar gelagertes Nabengehäuse (2), einen gegenüber der Nabenachse (5) drehbar gelagerten Rotor (8), und eine Freilaufeinrichtung (9) mit einer nabenseitigen Freilaufkomponente (10) und einer rotorseitigen Freilaufkomponente (20), welche jeweils axiale Eingriffselemente (33) zum Eingriff ineinander aufweisen, wobei das Nabengehäuse (2) in einem rotorseitigen Endbereich (4) mit einem rotorseitigen Nabenlager (14) und in einem gegenüberliegenden Endbereich (3) des Nabengehäuses (2) mit wenigstens einem weiteren Nabenlager (24) drehbar gegenüber der Nabenachse (5) gelagert ist, wobei die Nabenachse im Wesentlichen eine zylindrische Innenoberfläche aufweist, und wobei die nabenseitige Freilaufkomponente (10) drehfest mit dem Nabengehäuse (2) verbunden ist und wobei die rotorseitige Freilaufkomponente (20) drehfest mit dem Rotor (8) verbunden ist und in axialer Richtung (30) relativ zu dem Rotor (8) und dem Nabengehäuse (2) wenigstens zwischen einer Freilaufstellung und einer Eingriffsstellung (31) bewegbar ist, wobei die rotorseitige Freilaufkomponente (20) über wenigstens eine Vorbelastungseinrichtung (32) in die Eingriffsstellung (31) vorbelastet wird und wobei die Eingriffselemente (33) jeweils stirnseitig ausgebildet sind, wobei das rotorseitige Nabenlager (14) in einem axialen Längsabschnitt (5b) der Nabenachse (5) mit im Vergleich zu einem zentralen Bereich (5c) der Nabenachse vergrößerten Durchmesser an einem Lagersitz (68) der hohlen Nabenachse (5) aufgenommen ist und dass der axiale Längsabschnitt (5b) kürzer als 30 mm ist und dass sich ein lichter innerer Durchmesser (5g) der Nabenachse (5) über einer Länge der Nabenachse (5) um weniger als 1,5 mm ändert.

2. Nabe (1) nach Anspruch 1, wobei das rotorseitige Nabenlager (14) in dem axialen Längsabschnitt der Nabenachse mit im Vergleich zu einem zentralen Bereich der Nabenachse vergrößerten Durchmesser an einem Lagersitz radial zwischen der hohlen Nabenachse (5) und der rotorseitigen Freilaufkomponente (14) aufgenommen ist.

3. Nabe (1) nach Anspruch 1 oder 2, wobei ein lichter innerer Durchmesser der Nabenachse sich über einer Länge der Nabenachse um weniger als 10% ändert.

4. Nabe (1) nach einem der vorhergehenden Ansprüche, wobei die innere Durchgangsöffnung (5a) der Nabenachse (5) eine im Wesentlichen zylindrische Innenoberfläche aufweist.

5. Nabe (1) nach einem der vorhergehenden Ansprüche, wobei das rotorseitige Nabenlager (14) einen Außendurchmesser zwischen 26 mm und 30 mm und eine Breite zwischen 6 mm und 8 mm aufweist.

6. Nabe (1) nach einem der vorhergehenden Ansprüche, wobei in dem axialen Längsabschnitt (5b) eine Wandstärke (65b) an dem Lagersitz (68) zwischen 2 mm und 4 mm beträgt und wobei in dem zentralen Bereich (5c) eine Wandstärke (65c) der Nabenachse (5) kleiner 2 mm und größer 0,75 mm beträgt.

7. Nabe (1) nach einem der vorhergehenden Ansprüche, wobei die Spannachse (49a) umfasst ist.

8. Nabe (1) nach Anspruch 7, wobei die Spannachse (49a) wenigstens in einem Längsbereich (49b, 49c) eine im Wesentlichen zylindrische Außenoberfläche aufweist und wobei eine Außenoberfläche der Spannachse (49a) wenigstens in dem Längsbereich (49b, 49c) radial um weniger als 0,1 mm von der zylindrischen Form abweicht.

9. Nabe (1) nach einem der Ansprüche 7 oder 8, wobei ein maximaler radialer Abstand zwischen der Spannachse (49a) und der Nabenachse (5) wenigstens in dem Längsbereich (49b, 49c) weniger als 0,2 mm beträgt.

10. Nabe (1) nach einem der vorhergehenden Ansprüche, wobei in dem Nabengehäuse (2) ein Befestigungsabschnitt (2a) und ein Zentrierabschnitt (2b) ausgebildet sind
und wobei an der nabenseitigen Freilaufkomponente (10) ein Befestigungsbereich (10a) und ein Zentrierbereich (10b) ausgebildet sind,
und wobei der Befestigungsbereich (10a) mit dem Befestigungsabschnitt (2a) verschraubt ist und wobei der Zentrierbereich (10b) an dem Zentrierabschnitt (2b) zentriert wird und wobei eine radiale Toleranz (15a) zwischen der nabenseitigen Freilaufkomponente (10) und dem Nabengehäuse (2) an dem Befestigungsabschnitt (2a) größer ist als an dem Zentrierabschnitt (2b).

11. Nabe (1) nach einem der vorhergehenden Ansprüche, wobei die nabenseitige Freilaufkomponente (10) axial fest mit dem Nabengehäuse (2) verbunden ist.

12. Nabe (1) nach Anspruch 10, wobei der Befestigungsbereich (10a) über ein Außengewinde (10c) mit den Gewindegängen verfügt, welcher in ein Innengewinde (2c) mit Gewindegängen an dem Befestigungsabschnitt (2a) des Nabengehäuses (2) eingeschraubt ist.

13. Nabe (1) nach einem der vorhergehenden Ansprüche, wobei die nabenseitige Freilaufkomponente (10) einen axialen Körperabschnitt (13) mit einem inneren zentrischen Aufnahmeraum (11) und einem daran ausgebildeten Lagersitz (68) und einem daran aufgenommenen Wälzlager (14) zur drehbaren Lagerung des Nabengehäuses (2) aufweist.

14. Nabe (1) nach einem der vorhergehenden Ansprüche, wobei die Vorbelastungseinrichtung (32) wenigstens eine Spiralfeder und/oder wenigstens eine magnetische Feder umfasst.

15. Nabe (1) nach einem der vorhergehenden Ansprüche, umfassend ein Spannsystem (49) zur Befestigung an einer Gabel oder einem Rahmen, wobei das Spannsystem (49) eine Spannachse (49a) und einen Spannhebel umfasst.

## Claims

1. Hub (1) for at least partially muscle-powered vehicles and in particular bicycles (100), comprising a hollow hub axle (5) with a substantially cylindrical inner through hole (5a) for the passage of a clamping axle (49a), a hub shell (2) rotatably supported relative to the hub axle (5) by at least two hub bearings (14, 24), a rotor (8) rotatably supported relative to the hub axle (5), and a freewheel device (9) with a hub-side freewheel component (10) and a rotor-side freewheel component (20), each comprising axial engagement components (33) for engagement with one another,
wherein the hub shell (2) is rotatably supported relative to the hub axle (5) in a rotor-side end region (4) by a rotor-side hub bearing (14), and in an opposite end region (3) of the hub shell (2), by at least one further hub bearing (24), wherein the hub axle substantially shows a cylindrical inner surface,
and wherein the hub-side freewheel component (10) is non-rotatably connected with the hub shell, and wherein the rotor-side freewheel component (20) is non-rotatably connected with the rotor and is movable in the axial direction (30) relative to the rotor (8) and the hub shell (2) at least between a freewheel position and an engagement position (31), wherein the rotor-side freewheel component (20) is biased in the engagement position (31) through at least one biasing device (32), and wherein the engagement components (33) are each configured on the front face,
wherein the rotor-side hub bearing (14) is accommodated in an axially longitudinal section (5b) of the hub axle (5) having a diameter that is enlarged compared to a central region (5c) of the hub axle, in a bearing seat (68) of the hollow hub axle (5), and that the axially longitudinal section (5b) is shorter than 30 mm, and that the clear inner diameter (5g) of the hub axle (5) varies over the length of the hub axle (5) by less than 1.5 mm.

2. The hub (1) according to claim 1, wherein the rotor-side hub bearing (14) is radially accommodated in the axially longitudinal section of the hub axle, showing a diameter that is enlarged compared to the central region of the hub axle, in a bearing seat between the hollow hub axle (5) and the rotor-side freewheel component (14).

3. The hub (1) according to claim 1 or 2, wherein the clear inner diameter of the hub axle varies over the length of the hub axle by less than 10%.

4. The hub (1) according to any of the preceding claims, wherein the inner through hole (5a) of the hub axle (5) comprises a substantially cylindrical inner surface.

5. The hub (1) according to any of the preceding claims, wherein the rotor-side hub bearing (14) shows an outer diameter between 26 mm and 30 mm and a width between 6 mm and 8 mm.

6. The hub (1) according to any of the preceding claims, wherein the wall thickness (65b) in the bearing seat (68) is between 2 mm and 4 mm in the axially longitudinal section (5b), and wherein the wall thickness (65c) of the hub axle (5) is less than 2 mm and more than 0.75 mm in the central region (5c).

7. The hub (1) according to any of the preceding claims, wherein the clamping axle (49a) is comprised.

8. The hub (1) according to claim 7, wherein the clamping axle (49a) shows a substantially cylindrical outer surface at least in the longitudinal region (49b, 49c), and wherein the outer surface of the clamping axle (49a) radially deviates by less than 0.1 mm from the cylindrical shape, at least in the longitudinal region (49b, 49c).

9. The hub (1) according to any of the claims 7 or 8, wherein the maximum radial distance between the clamping axle (49a) and the hub axle (5) is less than 0.2 mm, at least in the longitudinal region (49b, 49c).

10. The hub (1) according to any of the preceding claims, wherein an attachment portion (2a) and a centering portion (2b) are configured in the hub shell (2), and wherein an attachment area (10a) and a centering area (10b) are configured on the hub-side freewheel component (10),
and wherein the attachment area (10a) is screwed to the attachment portion (2a), and wherein the centering area (10b) is centered on the centering portion (2b), and wherein the radial tolerance (15a) between the hub-side freewheel component (10) and the hub shell (2) is larger on the attachment portion (2a) than on the centering portion (2b).

11. The hub (1) according to any of the preceding claims, wherein the hub-side freewheel component (10) is axially fixedly connected with the hub shell (2).

12. The hub (1) according to claim 10, wherein the attachment area (10a) is provided with an external thread (10c) with thread grooves which screws into an internal thread (2c) with thread grooves on the attachment portion (2a) of the hub shell (2).

13. The hub (1) according to any of the preceding claims, wherein the hub-side freewheel component (10) has an axial body section (13) with an inner central receiving space (11) and a bearing seat (68) formed thereat and a roller bearing (14) received thereat to rotatably support the hub shell (2).

14. The hub (1) according to any of the preceding claims, wherein the biasing device (32) comprises at least one coil spring and/or at least one magnetic spring.

15. The hub (1) according to any of the preceding claims, comprising a clamping system (49) for attachment to a fork or a frame, wherein the clamping system (49) comprises a clamping axle (49a) and a clamping lever.

## Revendications

1. Moyeu (1) pour des véhicules entraînés au moins en partie par force musculaire et en particulier pour des bicyclettes (100), comprenant un axe de moyeu creux (5) avec une ouverture traversante intérieure (5a) pour l'essentiel cylindrique pour réaliser un axe de serrage, un carter de moyeu (2) monté de manière rotative par rapport à l'axe de moyeu (5) au moyen d'au moins deux paliers de moyeu (14, 24), un rotor (8) monté de manière rotative par rapport à l'axe de moyeu (5), et un dispositif de roue libre (9) ayant un composant de roue libre (10) côté moyeu et un composant de roue libre (20) côté rotor qui présentent chacun des éléments d'engagement (33) axiaux pour s'engager l'un dans l'autre,
dans lequel le carter de moyeu (2) est monté de manière rotative par rapport à l'axe de moyeu (5) dans une zone d'extrémité côté rotor (4) au moyen d'un palier de moyeu côté rotor (14) et dans une zone d'extrémité opposée (3) du carter de moyeu (2) au moyen d'au moins un autre palier de moyeu (24), dans lequel l'axe de moyeu présente pour l'essentiel une surface intérieure cylindrique,
et dans lequel le composant de roue libre (10) côté moyeu est relié de manière solidaire en rotation au carter de moyeu (2) et dans lequel le composant de roue libre côté rotor (20) est relié de manière solidaire en rotation au rotor (8) et peut être déplacé dans la direction axiale (30) par rapport au rotor (8) et au carter de moyeu (2) au moins entre une position de roue libre et une position d'engagement (31), dans lequel le composant de roue libre côté rotor (20) est précontraint dans la position d'engagement (31) par l'intermédiaire d'au moins un dispositif de précontrainte (32) et dans lequel les éléments d'engagement (33) sont réalisés chacun sur la face frontale,
dans lequel le palier de moyeu côté rotor (14) est logé sur un siège de palier (68) de l'axe de moyeu creux (5) dans une section longitudinale axiale (5b) de l'axe de moyeu (5) ayant un diamètre supérieur à celui d'une zone centrale (5c) de l'axe de moyeu, et la section longitudinale axiale (5b) est inférieure à 30 mm et un diamètre intérieur libre (5g) de l'axe de moyeu (5) varie de moins de 1,5 mm sur une longueur de l'axe de moyeu (5).

2. Moyeu (1) selon la revendication 1, dans lequel, dans la section longitudinale axiale de l'axe de moyeu ayant un diamètre supérieur à celui d'une zone centrale de l'axe de moyeu, le palier de moyeu côté rotor (14) est logé sur un siège de palier radialement entre l'axe de moyeu creux (5) le composant de roue libre côté rotor (14).

3. Moyeu (1) selon la revendication 1 ou 2, dans lequel un diamètre intérieur libre de l'axe de moyeu varie de moins de 10 % sur une longueur de l'axe du moyeu.

4. Moyeu (1) selon l'une quelconque des revendications précédentes, dans lequel l'ouverture traversante intérieure (5a) de l'axe du moyeu (5) présente une surface intérieure pour l'essentiel cylindrique.

5. Moyeu (1) selon l'une quelconque des revendications précédentes, dans lequel le palier de moyeu côté rotor (14) présente un diamètre extérieur compris entre 26 mm et 30 mm et une largeur comprise entre 6 mm et 8 mm.

6. Moyeu (1) selon l'une quelconque des revendications précédentes, dans lequel, dans la section longitudinale axiale (5b), une épaisseur de paroi (65b) sur le siège de palier (68) est comprise entre 2 mm et 4 mm et dans lequel, dans la zone centrale (5c), une épaisseur de paroi (65c) de l'axe de moyeu (5) est inférieure à 2 mm et supérieure à 0,75 mm.

7. Moyeu (1) selon l'une quelconque des revendications précédentes, dans lequel l'axe de serrage (49a) est compris.

8. Moyeu (1) selon la revendication 7, dans lequel l'axe de serrage (49a) présente une surface extérieure pour l'essentiel cylindrique au moins dans une zone longitudinale (49b, 49c) et dans lequel une surface extérieure de l'axe de serrage (49a) est, au moins dans la zone longitudinale (49b, 49c), radialement différente de moins de 0,1 mm de la forme cylindrique.

9. Moyeu (1) selon l'une quelconque des revendications 7 ou 8, dans lequel une distance radiale maximale entre l'axe de serrage (49a) et l'axe de moyeu (5) est inférieure à 0,2 mm au moins dans la zone longitudinale (49b, 49c).

10. Moyeu (1) selon l'une quelconque des revendications précédentes, dans lequel une section de fixation (2a) et une section de centrage (2b) sont réalisées dans le carter de moyeu (2),
et dans lequel une zone de fixation (10a) et une zone de centrage (10b) sont réalisées sur le composant de roue libre côté moyeu (10),
et dans lequel la zone de fixation (10a) est vissée à la section de fixation (2a) et dans lequel la zone de centrage (10b) est centrée sur la section de centrage (2b) et dans lequel une tolérance radiale (15a) entre le composant de roue libre côté moyeu (20) et le carter de moyeu (2) est plus grande au niveau de la section de fixation (2a) qu'au niveau de la section de centrage (2b).

11. Moyeu (1) selon l'une quelconque des revendications précédentes, dans lequel le composant de roue libre côté moyeu (10) est solidaire de manière axiale au carter de moyeu (2).

12. Moyeu (1) selon la revendication 10, dans lequel la zone de fixation (10a) dispose d'un filetage extérieur (10c) ayant les pas de vis qui se visse dans un filetage intérieur (2c) ayant des pas de vis sur la section de fixation (2a) du carter de moyeu (2).

13. Moyeu (1) selon l'une quelconque des revendications précédentes, dans lequel le composant de roue libre côté moyeu (10) présente une section de corps axiale (13) avec un espace de réception central intérieur (11) et un siège de palier (12) y formé et un roulement à rouleaux (14) y logé et destiné à supporter de manière rotative le carter de moyeu (2).

14. Moyeu (1) selon l'une quelconque des revendications précédentes, dans lequel le dispositif de précontrainte (32) comprend au moins un ressort spiral et/ou au moins un ressort magnétique.

15. Moyeu (1) selon l'une quelconque des revendications précédentes, comprenant un système de serrage (49) pour la fixation sur une fourche ou un cadre, dans lequel le système de serrage (49) comprend un axe de serrage (49a) et un levier de serrage.
